# EUROPEAN PATENT APPLICATION

(11) **EP 4 668 475 A1**
(43) Date of publication of application: **24.12.2025**
(21) Application number: 24781110.2
(22) Date of filing: 20.03.2024
(51) Int. Cl.: H01Q 1/24, H01Q 1/38, H04B 1/3827

(54) **ELECTRONIC DEVICE INCLUDING ANTENNA**

(30) Priority: 24.03.2023 KR 20230038898; 06.04.2023 KR 20230045263
(71) Applicant: Samsung Electronics Co., Ltd., Suwon-si, Gyeonggi-do 16677 (KR)
(72) Inventor: CHO, Huiwon, Suwon-si Gyeonggi-do 16677 (KR); KANG, Myeongkoo, Suwon-si Gyeonggi-do 16677 (KR); PARK, Gyubok, Suwon-si Gyeonggi-do 16677 (KR); CHO, Youngjun, Suwon-si Gyeonggi-do 16677 (KR)
(74) Representative: Gulde & Partner
(86) International application number: PCT/KR2024/003521
(87) International publication number: WO 2024/205119

(57) **Abstract**

An electronic device according to an embodiment comprises: a housing including a frame, a support member, and a non-conductive structure; a printed circuit board; a conductive part formed along a portion of the frame and including at least one protrusion; a conductive pattern that is in contact with the at least one protrusion and extends along the outer surface of the non-conductive structure; a connection part that is in contact with both the printed circuit board and the conductive pattern, thereby electrically connecting the printed circuit board and the conductive pattern; and a wireless communication circuit that is connected to the printed circuit board and configured to wirelessly communicate with an external electronic device via at least a portion of the conductive pattern. Various other embodiments may also be possible.

## Description

### [Technical Field]

The present disclosure relates to an electronic device including an antenna.

### [Background Art]

An electronic device may transmit or receive a signal through an antenna. A housing of the electronic device may include a conductive portion that includes a conductive material. The conductive portion of the housing may operate as an antenna radiator for transmitting and/or receiving a signal. A resonant frequency of a signal transmitted and/or received through the antenna radiator may be determined based on a length of the antenna radiator.

The conductive portion operating as an antenna radiator may be electrically connected to a printed circuit board thorough a connecting portion. The connecting portion may connect the conductive portion to wireless communication circuitry disposed on the printed circuit board. A conductive pattern may be positioned between the connecting portion and the conductive portion. The conductive pattern may provide an electrical connection between the connecting portion and the conductive portion.

The above-described information may be provided as related art for the purpose of helping the understanding of the present disclosure. No claim or determination is raised as to whether any of the above-described content may be applied as prior art related to the present disclosure.

### [Disclosure]

### [Technical Solution]

An electronic device is provided. The electronic device may comprise a housing including a frame at least partially surrounding an internal volume of the electronic device, a support disposed in the internal volume, and a non-conductive structure in contact with the frame and the support. The electronic device may comprise a printed circuit board (PCB) disposed on the support. The electronic device may comprise a conductive portion forming a portion of the frame and including at least one protruding portion protruding toward the internal volume. The electronic device may comprise a conductive pattern in contact with the at least one protruding portion and extending along an outer side of the non-conductive structure. The electronic device may comprise a connecting portion electrically connecting the PCB and the conductive pattern by contacting the PCB and the conductive pattern, respectively. The electronic device may comprise wireless communication circuitry electrically connected to the PCB and configured to communicate with an external electronic device through at least a portion of the conductive pattern.

An electronic device is provided. The electronic device may comprise a housing including a frame, and a support positioned in an internal volume surrounded by the frame. The electronic device may comprise a non-conductive structure positioned between the frame and the support. The electronic device may comprise a conductive portion formed along a portion of the frame. The electronic device may comprise a conductive pattern in contact with the conductive portion and positioned on the non-conductive structure. The electronic device may comprise first wireless communication circuitry connected to the printed circuit board (PCB) and configured to transmit or receive a first signal on a first frequency band through the conductive pattern. The electronic device may comprise second wireless communication circuitry connected to the PCB and configured to transmit or receive a second signal on a second frequency band through the conductive portion. The conductive pattern may be configured to provide an electrical connection between the PCB and the conductive portion.

### [Description of the Drawings]

FIG. 1 is a block diagram of an electronic device in a network environment according to an embodiment.
FIG. 2 illustrates an electronic device according to an embodiment.
FIG. 3 is an exploded perspective view of an electronic device according to an embodiment.
FIG. 4 illustrates an electronic device according to an embodiment.
FIG. 5 illustrates a portion of an electronic device according to an embodiment.
FIG. 6 illustrates a portion of a housing of an electronic device according to an embodiment.
FIG. 7A illustrates an example of a lateral contact structure between a printed circuit board and a conductive portion.
FIG. 7B illustrates an example of a back-side contact structure between a printed circuit board and a conductive portion.
FIG. 8A illustrates a connection state of a connecting portion and a conductive pattern according to an embodiment.
FIG. 8B is a cross-sectional view of an electronic device according to an embodiment, cut along line A-A' of FIG. 8A.
FIG. 8C is a cross-sectional view of an electronic device according to an embodiment, cut along line B-B' of FIG. 8A.
FIGS. 9A and 9B schematically illustrate examples of an electronic device.
FIGS. 10A and 10B schematically illustrate an example of an electronic device.
FIG. 11 schematically illustrates an example of an electronic device.
FIGS. 12A, 12B, 12C, 12D, 12E, 12F, 12G, and 12H schematically illustrate examples of an electronic device.
FIG. 13 schematically illustrates an example of an electronic device.
FIG. 14 illustrates a portion of an electronic device according to an embodiment.
FIG. 15A is a graph indicating radiation characteristics of an electronic device including a conductive pattern according to an embodiment.
FIG. 15B illustrates a portion of the graph of FIG. 15A.

### [Mode for Invention]

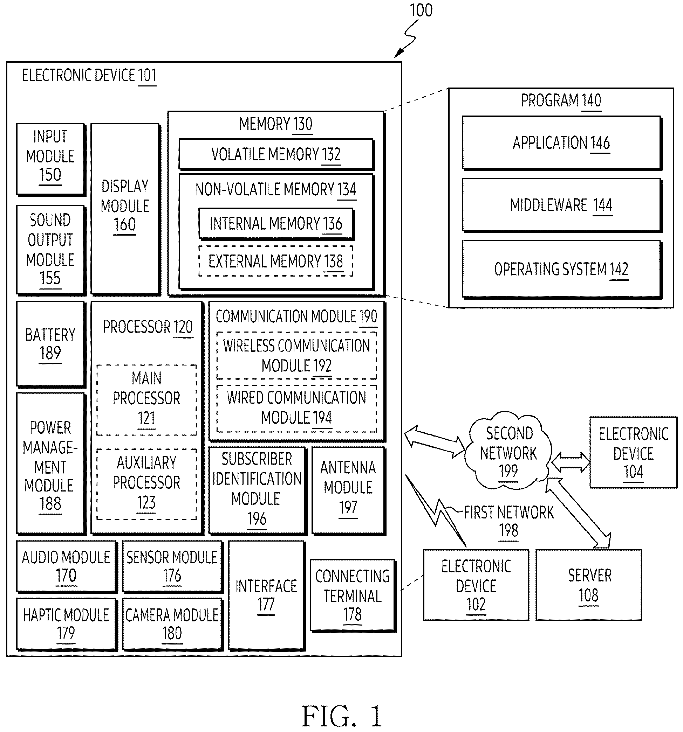

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

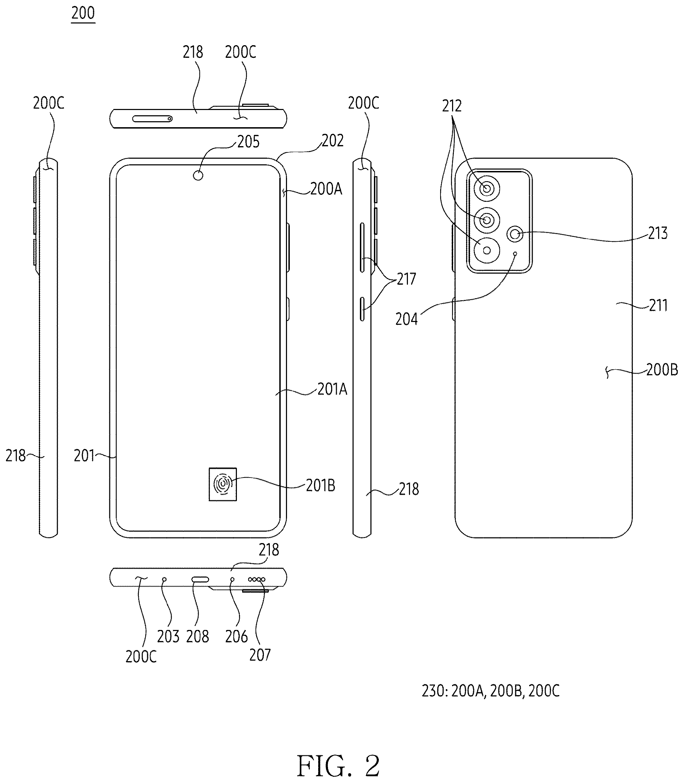

FIG. 2 illustrates an electronic device according to an embodiment.

Referring to FIG. 2, an electronic device 101 according to an embodiment may include a housing 210 that forms an exterior of the electronic device 101. For example, the housing 210 may include a first side (or a front side) 200A, a second side (or a rear side) 200B, and a third side (or a lateral side) 200C surrounding a space between the first side 200A and the second side 200B.

The electronic device 101 according to an embodiment may include a substantially transparent first plate 202. According to an embodiment, the first plate 202 may form at least a portion of the first side 200A. According to an embodiment, the first plate 202 may include, for example, a glass plate or a polymer plate, both of which include various coating layers, but is not limited thereto.

The electronic device 101 according to an embodiment may include a substantially opaque second plate 211. According to an embodiment, the second plate 211 may form at least a portion of the second side 200B. According to an embodiment, the second plate 211 may be formed of coated or colored glass, ceramic, polymer, metal (e.g., aluminum, stainless steel (STS), or magnesium), or a combination of at least two of the materials.

The electronic device 101 according to an embodiment may include a frame 218. According to an embodiment, the frame 218 may form at least a portion of the third side 200C of the electronic device 101 by being coupled to the first plate 202 and/or the second plate 211. For example, the frame 218 may form the entirety of the third side 200C of the electronic device 101. For example, the frame 218 may form the third side 200C of the electronic device 101 together with the first plate 202 and/or the second plate 211.

The electronic device 101 according to an embodiment may include at least one of a display 201, audio modules 203, 204, and 207, a sensor module (not illustrated), camera modules 205, 212, and 213, a key input device 217, a light emitting element (not illustrated), and/or a connector hole 208. According to an embodiment, the electronic device 101 may omit at least one of the above components (e.g., the key input device 217 or the light emitting element (not illustrated)), or may additionally include another component.

According to an embodiment, at least a portion of the display 201 (e.g., the display module 160 of FIG. 1) may be visible through the first plate 202 forming the first side 200A. According to an embodiment, the display 201 may be disposed on a back side of the first plate 202.

According to an embodiment, an outer shape of the display 201 may be formed to be substantially the same as an outer shape of the first plate 202 adjacent to the display 201. According to an embodiment, in order to expand an area in which the display 201 is visually exposed, a spacing between an outer periphery of the display 201 and an outer periphery of the first plate 202 may be formed to be substantially the same.

According to an embodiment, the display 201 (or the first side 200A of the electronic device 101) may include a screen display area 201A. According to an embodiment, the display 201 may provide visual information to a user through the screen display area 201A. In the illustrated embodiment, when the first side 200A is viewed from the front, the screen display area 201A is illustrated as being spaced apart from an outer periphery of the first side 200A and positioned inside the first side 200A, but is not limited thereto. According to an embodiment, when the first side 200A is viewed from the front, at least a portion of an edge of the screen display area 201A may substantially coincide with an edge of the first side 200A (or the first plate 202).

According to an embodiment, the screen display area 201A may include a sensing area 201B configured to obtain biometric information of the user. Herein, "the screen display area 201A includes the sensing area 201B" may be understood to mean that at least a portion of the sensing area 201B may be overlapped with the screen display area 201A. For example, the sensing area 201B may mean a region capable of displaying visual information by the display 201, as in another region of the screen display area 201A, and additionally capable of obtaining biometric information (e.g., a fingerprint) of the user. According to an embodiment, the sensing area 201B may be formed in the key input device 217.

According to an embodiment, the display 201 may include a region in which a first camera module 205 (e.g., the camera module 180 of FIG. 1) is positioned. According to an embodiment, an opening portion may be formed in the region of the display 201, and the first camera module 205 (e.g., a punch-hole camera) may be at least partially disposed in the opening portion to face the first side 200A. In this case, the screen display area 201A may surround at least a portion of an edge of the opening. According to an embodiment, the first camera module 205 (e.g., an under display camera (UDC)) may be disposed under the display 201 to overlap with the region of the display 201. In this case, the display 201 may provide visual information to the user through the region, and additionally, the first camera module 205 may obtain an image corresponding to a direction facing the first side 200A through the region of the display 201.

According to an embodiment, the display 201 may be coupled to or disposed adjacent to touch sensing circuitry, a pressure sensor capable of measuring intensity (pressure) of a touch, and/or a digitizer for detecting a magnetic field-based stylus pen.

According to an embodiment, the audio modules 203, 204, and 207 (e.g., the audio module 170 of FIG. 1) may include microphone holes 203 and 204 and/or a speaker hole 207.

According to an embodiment, the microphone holes 203 and 204 may include a first microphone hole 203 formed in a partial region of the third side 200C and/or a second microphone hole 204 formed in a partial region of the second side 200B. A microphone (not illustrated) for obtaining external sound may be disposed inside the microphone holes 203 and 204. The microphone may include a plurality of microphones to sense a direction of sound.

According to an embodiment, the second microphone hole 204 formed in a partial region of the second side 200B may be disposed adjacent to the camera modules 205, 212, and 213. For example, the second microphone hole 204 may obtain sound according to an operation of the camera modules 205, 212, and 213. However, it is not limited thereto.

According to an embodiment, the speaker hole 207 may include an external speaker hole 207 and a receiver hole for calls (not illustrated). The external speaker hole 207 may be formed in a portion of the third side 200C of the electronic device 101. According to an embodiment, the external speaker hole 207 may be implemented as one hole with the microphone hole 203. Although not illustrated, the receiver hole for calls (not illustrated) may be formed in another portion of the third side 200C. For example, the receiver hole for calls may be formed in an opposite side of the external speaker hole 207 in the third side 200C. For example, based on the illustration of FIG. 2, the external speaker hole 207 may be formed on the third side 200C corresponding to a lower portion of the electronic device 101, and the receiver hole for calls may be formed on the third side 200C corresponding to an upper portion of the electronic device 101. However, it is not limited thereto, and according to an embodiment, the receiver hole for calls may be formed in a position other than the third side 200C. For example, the receiver hole for calls may be formed by a spaced region between the first plate 202 (or the display 201) and the frame 218.

According to an embodiment, the electronic device 101 may include at least one speaker (not illustrated) configured to output sound to the outside of the housing 210 through the external speaker hole 207 and/or the receiver hole for calls (not illustrated).

According to an embodiment, the sensor module (not illustrated) (e.g., the sensor module 176 of FIG. 1) may generate an electrical signal or data value corresponding to an internal operating state or an external environmental state of the electronic device 101. For example, the sensor module may include at least one of a proximity sensor, an HRM sensor, a fingerprint sensor, a gesture sensor, a gyro sensor, a barometric pressure sensor, a magnetic sensor, an acceleration sensor, a grip sensor, a color sensor, an infrared (IR) sensor, a biometric sensor, a temperature sensor, a humidity sensor, or an illuminance sensor.

According to an embodiment, the camera modules 205, 212, and 213 (e.g., the camera module 180 of FIG. 1) may include the first camera module 205 disposed to face the first side 200A of the electronic device 101, a second camera module 212 disposed to face the second side 200B, and a flash 213.

According to an embodiment, the second camera module 212 may include a plurality of cameras (e.g., a dual camera, a triple camera, or a quad camera). However, the second camera module 212 is not necessarily limited to including a plurality of cameras, and may include only one camera.

According to an embodiment, the first camera module 205 and the second camera module 212 may include one or a plurality of lenses, an image sensor, and/or an image signal processor.

According to an embodiment, the flash 213 may include, for example, a light emitting diode or a xenon lamp. According to an embodiment, two or more lenses (an infrared camera, a wide-angle lens, and telephoto lenses) and image sensors may be disposed on one side of the electronic device 101.

According to an embodiment, the key input device 217 (e.g., the input module 150 of FIG. 1) may be disposed on the third side 200C of the electronic device 101. According to an embodiment, the electronic device 101 may not include some or all of the key input device 217, and the excluded key input device 217 may be implemented in another form, such as a soft key, on the display 201.

According to an embodiment, the connector hole 208 may be formed on the third side 200C of the electronic device 101 such that a connector of an external device may be received. A connecting terminal (e.g., the connecting terminal 178 of FIG. 1) electrically connected to the connector of the external device may be disposed in the connector hole 208. The electronic device 101 according to an embodiment may include an interface module (e.g., the interface 177 of FIG. 1) for processing an electrical signal transmitted and received through the connecting terminal.

According to an embodiment, the frame 218 may include a vent hole 206. For example, air from outside the housing 210 may flow into the housing 210 through the vent hole 206. For example, air inside the housing 210 may flow outside the housing 210 through the vent hole 206. A position of the vent hole 206 is not limited to a position illustrated in FIG. 2.

According to an embodiment, the electronic device 101 may include a light emitting element (not illustrated). For example, the light emitting element (not illustrated) may be disposed on the first side 200A of the housing 210. The light emitting element (not illustrated) may provide status information of the electronic device 101 in optical form. According to an embodiment, the light emitting element (not illustrated) may provide a light source in conjunction with an operation of the first camera module 205. For example, the light emitting element (not illustrated) may include an LED, an IR LED, and/or a xenon lamp.

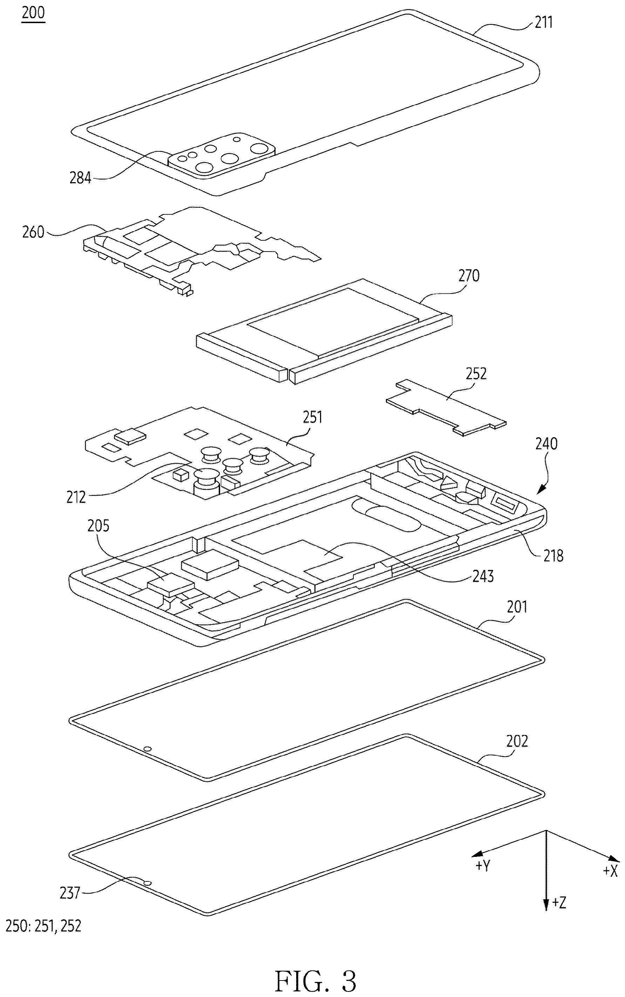

FIG. 3 is an exploded perspective view of an electronic device according to an embodiment.

Hereinafter, redundant descriptions for components having the same reference numerals as the components described above are omitted.

Referring to FIG. 3, an electronic device 101 according to an embodiment may include a frame 218, a support 243, a first printed circuit board (PCB) 251, a second PCB 252, a cover plate 260, and/or a battery 270.

The electronic device 101 according to an embodiment may include the frame 218 forming an exterior (e.g., the third side 200C of FIG. 2) of the electronic device 101, and the support 243 extending inward from the frame 218. According to an embodiment, the frame 218 and the support 243 may be disposed between a display 201 and a second plate 211. For example, the frame 218 may surround a space between the second plate 211 and a first plate 202 (and/or the display 201). For example, the support 243 may extend from the frame 218 in the space.

According to an embodiment, the support 243 may support or accommodate other components included in the electronic device 101. For example, the display 201 may be disposed on a side of the support 243 facing a direction (e.g., the +z direction), and the display 201 may be supported by the support 243. For example, on another side of the support 243 facing a direction (e.g., the -z direction) opposite to the direction, the first PCB 251, the second PCB 252, the battery 270, and a second camera module 212 may be disposed. For example, the first PCB 251, the second PCB 252, the battery 270, and the second camera module 212 may each be seated in a recess defined by the frame 218 and/or the support 243.

According to an embodiment, the first PCB 251, the second PCB 252, and the battery 270 may each be coupled to the support 243. For example, the first PCB 251 and the second PCB 252 may be fixedly disposed in the support 243 through a coupling member such as a screw. For example, the battery 270 may be fixedly disposed in the support 243 through an adhesive member (e.g., double-sided tape). However, it is not limited to the example described above.

According to an embodiment, the cover plate 260 may be disposed between the first PCB 251 and the second plate 211. According to an embodiment, the cover plate 260 may be disposed on the first PCB 251. For example, the cover plate 260 may be disposed on a side of the first PCB 251 facing the -z direction.

According to an embodiment, the cover plate 260 may at least partially overlap with the first PCB 251 based on a z-axis. According to an embodiment, the cover plate 260 may cover at least a partial region of the first PCB 251. Through this, the cover plate 260 may protect the first PCB 251 from physical impact or prevent detachment of a connector coupled to the first PCB 251.

According to an embodiment, the cover plate 260 may be fixedly disposed in the first PCB 251 through a coupling member (e.g., a screw), or may be coupled to the support 243 together with the first PCB 251 through the coupling member.

According to an embodiment, the display 201 may be disposed between the support 243 and the first plate 202. For example, the first plate 202 may be disposed on a side (e.g., in the +z direction) of the display 201, and the support 243 may be disposed on another side (e.g., in the -z direction) of the display 201.

According to an embodiment, the first plate 202 may be coupled to the display 201. For example, the first plate 202 and the display 201 may be adhered to each other through an optical adhesive member (e.g., optically clear adhesive (OCA) or optically clear resin (OCR)) interposed therebetween.

According to an embodiment, the first plate 202 may be coupled to the frame 218. For example, when viewed in the z-axis direction, the first plate 202 may include a peripheral portion extending beyond the display 201, and may be adhered to the frame 218 through an adhesive member (e.g., waterproof tape) disposed between the peripheral portion of the first plate 202 and the frame 218. However, it is not limited to the example described above.

According to an embodiment, a processor (e.g., the processor 120 of FIG. 1), memory (e.g., the memory 130 of FIG. 1), and/or an interface (e.g., the interface 177 of FIG. 1) may be disposed in the first PCB 251 and/or the second PCB 252. The processor may include, for example, one or more of a central processing unit, an application processor, a graphics processing unit, an image signal processor, a sensor hub processor, or a communication processor. The memory may include, for example, volatile memory or non-volatile memory. The interface may include, for example, a high definition multimedia interface (HDMI), a universal serial bus (USB) interface, an SD card interface, and/or an audio interface. The interface may electrically or physically connect the electronic device 101 to an external electronic device, and may include a USB connector, an SD card/MMC connector, or an audio connector. According to an embodiment, the first PCB 251 and the second PCB 252 may be operably or electrically connected to each other through a connecting member (e.g., a flexible printed circuit board).

According to an embodiment, the battery 270 (e.g., the battery 189 of FIG. 1) may supply power to at least one component of the electronic device 101. For example, the battery 270 may include a rechargeable secondary battery or a fuel cell. At least a portion of the battery 270 may be disposed on substantially the same plane as the first PCB 251 and/or the second PCB 252.

The electronic device 101 according to an embodiment may include an antenna module (not illustrated) (e.g., the antenna module 197 of FIG. 1). According to an embodiment, the antenna module may be disposed between the second plate 211 and the battery 270. The antenna module may include, for example, a near field communication (NFC) antenna, a wireless charging antenna, and/or a magnetic secure transmission (MST) antenna. The antenna module may, for example, perform near field communication with an external device, or transmit and receive power wirelessly with an external device.

According to an embodiment, a first camera module 205 (e.g., a front-facing camera) may be disposed in at least a portion of the support 243 such that its lens may receive external light through a partial region (e.g., a camera region 237) of the first plate 202 (e.g., the front side 200A of FIG. 2).

According to an embodiment, the second camera module 212 (e.g., a rear camera) may be disposed between the support 243 and the second plate 211. According to an embodiment, the second camera module 212 may be electrically connected to the first PCB 251 through a connecting member (e.g., a connector). According to an embodiment, the second camera module 212 may be disposed such that its lens may receive external light through a camera region 284 of the second plate 211 of the electronic device 101.

According to an embodiment, the camera region 284 may be formed on a surface of the second plate 211 (e.g., the rear side 200B of FIG. 2). According to an embodiment, the camera region 284 may be formed to be at least partially transparent such that external light may enter through the lens of the second camera module 212. According to an embodiment, at least a portion of the camera region 284 may protrude from the surface of the second plate 211 to a certain height. However, it is not limited thereto, and according to an embodiment, the camera region 284 may form substantially the same plane as the surface of the second plate 211.

According to an embodiment, a housing 210 of the electronic device 101 may mean a component or structure that forms at least a portion of the exterior of the electronic device 101. In this regard, at least a portion of the first plate 202, the frame 218, and/or the second plate 211, which form the exterior of the electronic device 101, may be referred to as the housing 210 of the electronic device 101.

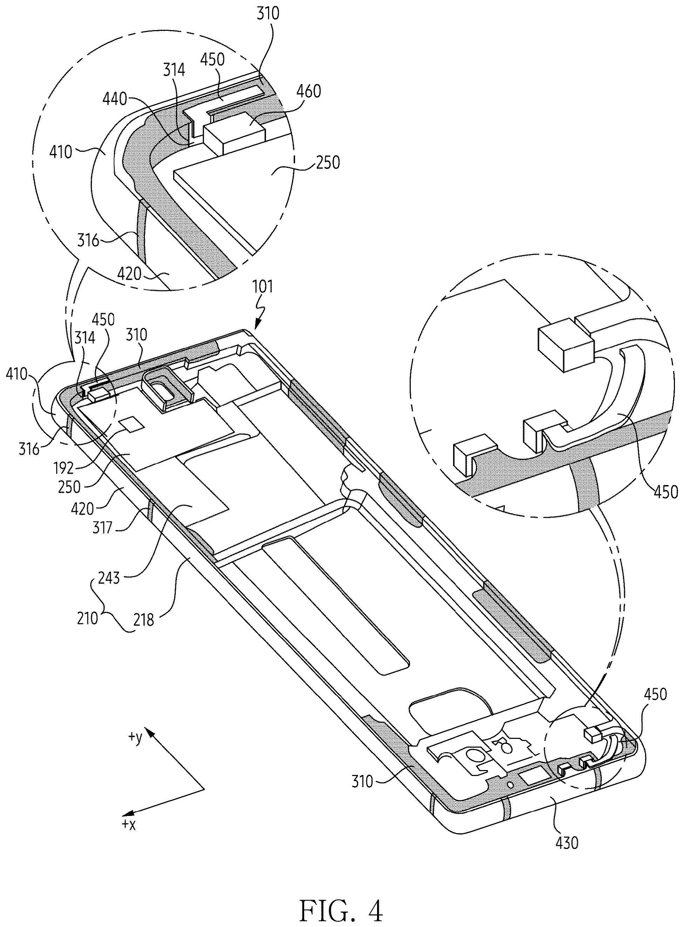

FIG. 4 illustrates an electronic device according to an embodiment.

Referring to FIG. 4, an electronic device 101 according to an embodiment may include a housing 210, a printed circuit board (PCB) 250, a plurality of conductive portions 410, 420, and 430, a conductive pattern 450, a connecting portion 460, and wireless communication circuitry 192.

According to an embodiment, the housing 210 may form an exterior of the electronic device 101. For example, the housing 210 may include a frame 218 and a support 243. The frame 218 may be disposed between a first plate (e.g., the first plate 202 of FIG. 3) and a second plate (e.g., the second plate 211 of FIG. 3). For example, the frame 218 may be referred to as a lateral member forming at least a portion of a lateral side of the housing 210. The first plate 202, the second plate 211, and the frame 218 may form an internal volume in which components of the electronic device 101 may be disposed. For example, the frame 218 may at least partially surround the internal volume of the electronic device 101. For example, the support 243 may extend from the frame 218 to the internal volume. The support 243 may be configured to support the components of the electronic device 101. For example, the PCB 250 may be positioned on the support 243.

According to an embodiment, the frame 218 may include a segmented structure. For example, the segmented structure may be formed by the plurality of conductive portions 410, 420, and 430, and non-conductive portions 316 and 317 positioned between the plurality of conductive portions 410, 420, and 430. For example, the plurality of conductive portions 410, 420, and 430 may form a portion of the frame 218. The plurality of conductive portions 410, 420, and 430 may be electrically separated by being spaced apart from each other with a non-conductive portion between them.

For example, the frame 218 may include a first conductive portion 410, a second conductive portion 420, and/or a third conductive portion 430. For example, the first conductive portion 410 may be positioned along a portion of a +y direction edge of the housing 210 and a portion of a +x direction edge of the housing 210. For example, the second conductive portion 420 may be positioned along another portion of the +x direction edge of the housing 210. For example, the third conductive portion 430 may be positioned along a portion of a -x direction edge of the housing 210 and a portion of a -y direction edge of the housing 210. The first conductive portion 410 and the second conductive portion 420 may be spaced apart from each other by a first non-conductive portion 316 between the first conductive portion 410 and the second conductive portion 420. The second conductive portion 420 may be in contact with the first non-conductive portion 316 and a second non-conductive portion 317, respectively. The segmented structure of the frame 218 is not limited to the structure described above.

According to an embodiment, the housing 210 may include a non-conductive structure 310. For example, the non-conductive structure 310 may be in contact with the frame 218 and the support 243 by being positioned in at least a portion of a space between the frame 218 and the support 243. For example, the non-conductive structure 310 may be integrally formed with the non-conductive portions 316 and 317, which separate the plurality of conductive portions 410, 420, and 430 from each other by extending in contact with the plurality of conductive portions 410, 420, and 430. For example, the non-conductive structure 310 may include a polymer, but is not limited thereto. The non-conductive structure 310 may be referred to as a molded portion.

According to an embodiment, at least a portion of the plurality of conductive portions 410, 420, and 430 may operate as an antenna radiator for performing communication with an external electronic device. For example, the wireless communication circuitry 192 may be configured to transmit a signal to an external electronic device or receive a signal from an external electronic device through the first conductive portion 410. For example, an antenna including at least a portion of the first conductive portion 410 may be formed by the wireless communication circuitry 192 feeding a signal to a feed point of the first conductive portion 410. For example, at least a portion of the first conductive portion 410 may be configured to transmit and/or receive a signal as an antenna radiator. For example, frequency characteristics (e.g., resonant frequency) of the signal may be determined based on a length of the first conductive portion 410.

According to an embodiment, the wireless communication circuitry 192 may be electrically connected to the PCB 250. The wireless communication circuitry 192 may be electrically connected to at least a portion of the plurality of conductive portions 410, 420, and 430 through the PCB 250. For example, the first conductive portion 410 may include at least one protruding portion 440 protruding toward the PCB 250 on the support 243. For example, the at least one protruding portion 440 may protrude toward the PCB 250 positioned in an internal volume or toward the internal volume to facilitate contact between the first conductive portion 410 and the PCB 250. For example, the at least one protruding portion 440 may include the feed point and/or a ground point of the first conductive portion 410. For example, the at least one protruding portion 440 may be partially exposed to the internal volume through an opening portion 314 of the non-conductive structure 310. The at least one protruding portion 440 exposed to the internal volume may be electrically connected to the PCB 250. For example, the conductive pattern 450 and the connecting portion 460 may be configured to provide an electrical connection between the at least one protruding portion 440 and the PCB 250. For example, the connecting portion 460 may include a c-clip.

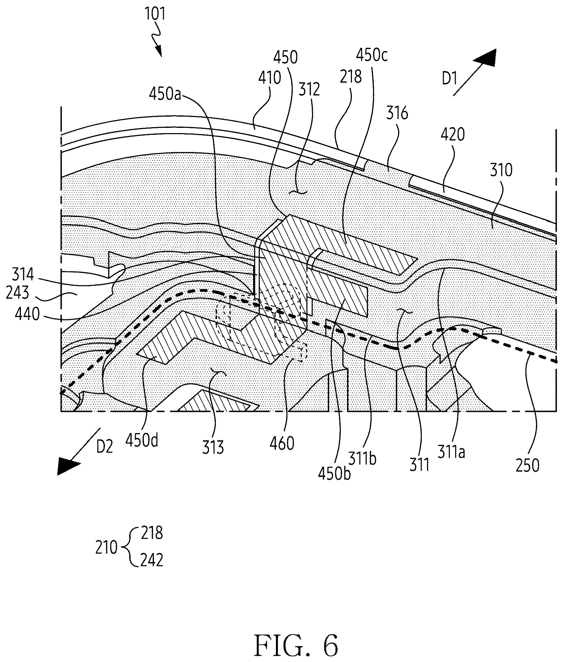

According to an embodiment, at least a portion of the conductive pattern 450 may be positioned between the connecting portion 460 and the at least one protruding portion 440. For example, the conductive pattern 450 may be in contact with the at least one protruding portion 440 partially exposed to the internal volume. For example, a portion of the conductive pattern 450 (e.g., a junction portion 450a of FIG. 6) may be attached to the at least one protruding portion 440 through ultrasonic welding or laser bonding, but is not limited thereto. The connecting portion 460 may be configured to electrically connect the PCB 250 and the conductive pattern 450 by respectively contacting the PCB 250 and the conductive pattern 450, which is in contact with the at least one protruding portion 440. For example, the conductive pattern 450 may be understood as a term referring to a structure including a conductive material (e.g., metal) to provide an electrical connection. In the present disclosure, the meaning of a component described as the conductive pattern 450 is not limited to that term and may be referred to as conductive ink, a conductive sheet, a plated portion, a conductive pad, or a conductive layer. The first conductive portion 410 and the connecting portion 460 may be electrically connected through the conductive pattern 450 attached to the at least one protruding portion 440, without direct contact. For example, the wireless communication circuitry 192 and the first conductive portion 410 may be electrically connected through the PCB 250, the connecting portion 460, and the conductive pattern 450.

For example, when the at least one protruding portion 440 partially exposed to the internal volume directly contacts the connecting portion 460, galvanic corrosion may occur between dissimilar metals. An oxide film may be formed between the at least one protruding portion 440 and the connecting portion 460 due to galvanic corrosion. The oxide film may cause unstable contact between the connecting portion 460 and the first conductive portion 410. Since the oxide film has high resistance, it may interfere with transmission and/or reception of an electrical signal. The conductive pattern 450 attached to the at least one protruding portion 440 may provide stable contact by reducing galvanic corrosion.

According to an embodiment, a portion of the conductive pattern 450 may extend along an outer side of the non-conductive structure 310. Since the conductive pattern 450 includes a conductive material (e.g., metal) for providing an electrical connection, it may operate as an antenna radiator when it has a certain length. For example, as illustrated in FIG. 4, the conductive pattern 450 may have a certain length when extending from a junction portion between the at least one protruding portion 440 and the connecting portion 460, along the outer side of the non-conductive structure 310 between the support 243 and the frame 218. Since the conductive pattern 450 is in contact with the connecting portion 460, the wireless communication circuitry 192 may be electrically connected to the conductive pattern 450. The conductive pattern 450 may operate as an antenna radiator used for communicating with an external electronic device by being fed from the wireless communication circuitry 192.

According to an embodiment, the conductive pattern 450 may operate as an antenna radiator distinct from the first conductive portion 410, or may operate as an antenna radiator together with the first conductive portion 410 by being electrically connected to the first conductive portion 410. Since adjustment of a physical length of the frame 218, which forms a portion of an exterior of the electronic device 101, is difficult, adjustment of frequency characteristics of an antenna including at least a portion of the first conductive portion 410 may be limited. When the conductive pattern 450 is used, as the length of the first conductive portion 410 is substantially extended by a length of the conductive pattern 450 due to the conductive pattern 450, the electronic device 101 may transmit and/or receive a signal on an additional frequency band that is difficult to obtain solely with the structure of the frame 218.

Hereinafter, the present disclosure describes the electronic device 101 in which the conductive pattern 450 may be used as at least a portion of an antenna radiator. Although the following descriptions exemplarily describe the first conductive portion 410, they are not limited thereto. For example, the following descriptions may be applied substantially the same to the second conductive portion 420 and/or the third conductive portion 430 of FIG. 4. For example, the following descriptions may be applied substantially the same to the conductive pattern 450 attached to the third conductive portion 430.

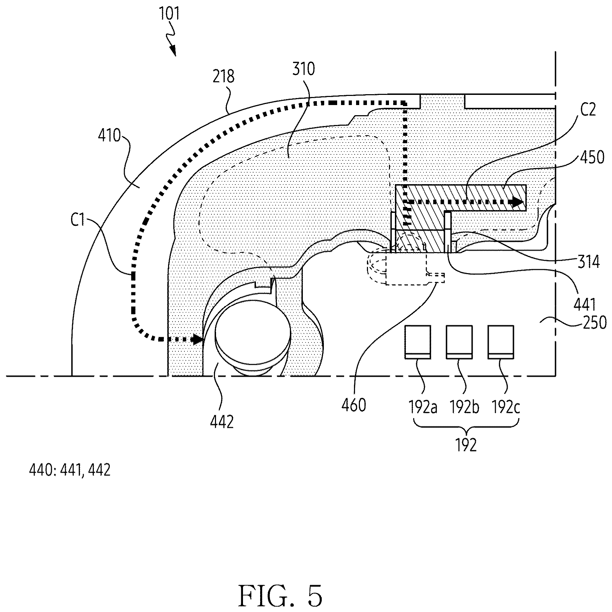

FIG. 5 illustrates a portion of an electronic device according to an embodiment.

Referring to FIG. 5, wireless communication circuitry 192 may be electrically connected to a printed circuit board (PCB) 250. The wireless communication circuitry 192 may provide or obtain a signal through a conductive layer of the PCB 250. A connecting portion 460 may be in contact with the PCB 250 and a conductive pattern 450, respectively. The conductive pattern 450 may be attached to at least one protruding portion 440 partially exposed to an internal volume of an electronic device 101 through an opening portion 314 of a non-conductive structure 310. For example, through the structure, an electrical connection may be formed among a first conductive portion 410, the conductive pattern 450, the connecting portion 460, the PCB 250, and the wireless communication circuitry 192.

According to an embodiment, the first conductive portion 410 may operate as an antenna radiator capable of transmitting and/or receiving a first signal on a first frequency band. For example, the first conductive portion 410 may include a first protruding portion 441 and/or a second protruding portion 442 protruding toward the PCB 250. For example, the first protruding portion 441 may include a feed point at which a signal for feeding is provided to the first conductive portion 410. The second protruding portion 442 may include a ground point at which the first conductive portion 410 is electrically connected to ground (e.g., a ground layer of the PCB 250). However, it is not limited thereto.

For example, the wireless communication circuitry 192 may include first wireless communication circuitry 192a configured to transmit or receive a first signal on the first frequency band. For example, the first wireless communication circuitry 192a may be configured to communicate with an external electronic device by feeding the first signal to the first conductive portion 410. For example, the first signal provided from the first wireless communication circuitry 192a to the first conductive portion 410 may be provided to the first conductive portion 410 through the PCB 250, the connecting portion 460, and the conductive pattern 450. For example, the first wireless communication circuitry 192a may be configured to feed the first conductive portion 410 through the conductive pattern 450 contacting the first protruding portion 441. As the first wireless communication circuitry 192a feeds the first conductive portion 410 through the first protruding portion 441, a radiation current C1 may be formed from the first protruding portion 441 to the second protruding portion 442. A resonant frequency of the signal transmitted through the first conductive portion 410 may be determined based on a length from the first protruding portion 441 to the second protruding portion 442, along which the radiation current C1 is formed.

According to an embodiment, the conductive pattern 450 may operate as an antenna radiator capable of transmitting and/or receiving a second signal on a second frequency band. For example, the conductive pattern 450 may be attached to the first protruding portion 441. The conductive pattern 450 may extend along an outer side of the non-conductive structure 310.

For example, the wireless communication circuitry 192 may include second wireless communication circuitry 192b configured to transmit or receive a second signal on the second frequency band. The second wireless communication circuitry 192b may be configured to communicate with an external electronic device by feeding the second signal to the conductive pattern 450. For example, a second signal provided from the second wireless communication circuitry 192b to the conductive pattern 450 may be provided to the conductive pattern 450 through the PCB 250 and the connecting portion 460. For example, the second wireless communication circuitry 192b may be configured to feed the second signal to a portion of the conductive pattern 450 contacting the first protruding portion 441. As the second wireless communication circuitry 192b feeds the conductive pattern 450, a radiation current C2 may be formed along the conductive pattern 450. A resonant frequency of the signal transmitted through the conductive pattern 450 may be determined based on a length of the conductive pattern 450 along which the radiation current C2 is formed.

According to an embodiment, the first conductive portion 410 and the conductive pattern 450 may operate as an antenna radiator by being electrically connected. For example, the conductive pattern 450 may substantially extend a length of the first conductive portion 410 by extending along the outer side of the non-conductive structure 310 that contacts or couples with at least a portion of the first conductive portion 410. Since a portion of the conductive pattern 450 extends along the outer side of the non-conductive structure 310, the first conductive portion 410 and the conductive pattern 450 may be spaced apart from each other.

For example, the wireless communication circuitry 192 may include third wireless communication circuitry 192c configured to transmit or receive a third signal on a third frequency band. The third wireless communication circuitry 192c may be configured to communicate with an external electronic device by feeding the third signal to the first conductive portion 410 and the conductive pattern 450, which are electrically connected to each other. For example, by the conductive pattern 450 being attached to the first protruding portion 441, the first conductive portion 410 and the conductive pattern 450 may be electrically connected, and the third wireless communication circuitry 192c may be configured to feed the third signal to the first conductive portion 410 and the conductive pattern 450 through the PCB 250 and the connecting portion 460. As the third wireless communication circuitry 192c feeds the third signal to the first conductive portion 410 and/or the conductive pattern 450, the radiation currents C1 and C2 may be formed along the first conductive portion 410 and the conductive pattern 450. A resonant frequency of a signal radiated through the first conductive portion 410 and the conductive pattern 450 may be formed based on the length of the first conductive portion 410 and the conductive pattern 450 along which the radiation currents C1 and C2 are formed.

For example, the electronic device 101 may use at least a portion of the conductive pattern 450, which provides an electrical connection between the first conductive portion 410 and the connecting portion 460, as an antenna radiator. For example, the conductive pattern 450 may transmit and/or receive a signal of the electronic device 101 by operating as a radiator together with the first conductive portion 410. For another example, the conductive pattern 450 may operate as an antenna radiator independent of the first conductive portion 410. Since the length of the first conductive portion 410, which forms a portion of the frame 218, is difficult to adjust, an additional band capable of being covered by the electronic device 101 may be obtained using the conductive pattern 450, whose length is easier to adjust, as an antenna radiator.

For example, the electronic device 101 may include an antenna structure other than a plurality of conductive portions (e.g., the plurality of conductive portions 410, 420, and 430 of FIG. 4) positioned in the frame 218. For example, the electronic device 101 may include a laser direct structuring (LDS) antenna that includes a conductive pattern formed on a non-conductive bracket. Since the conductive pattern of the LDS antenna is formed on the non-conductive bracket, it may be difficult to contact the plurality of conductive portions 410, 420, and 430. For example, when the conductive pattern 450 is used as an independent antenna radiator, an antenna including at least a portion of the conductive pattern 450 may replace the LDS antenna. The LDS antenna may be omitted from the electronic device 101.

FIG. 6 illustrates a portion of a housing of an electronic device according to an embodiment.

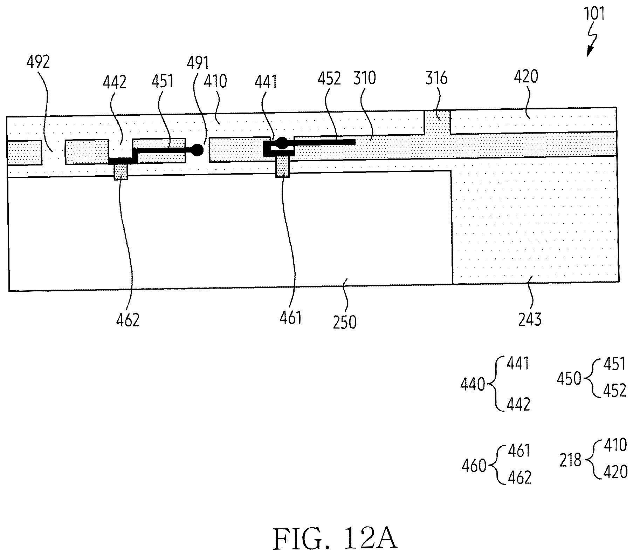

Referring to FIG. 6, a housing 210 may include a non-conductive structure 310 positioned between a frame 218 and a support 243. The non-conductive structure 310 may insulate a plurality of conductive portions (e.g., a first conductive portion 410 and a second conductive portion 420), which operate as antenna radiators, from another portion of the housing 210. For example, the non-conductive structure 310 may include a first non-conductive portion 316 formed by extending between the first conductive portion 410 and the second conductive portion 420, to separate the first conductive portion 410 and the second conductive portion 420. For example, the non-conductive structure 310 may provide a portion of a structure for an antenna including at least a portion of the first conductive portion 410 to operate as a slot antenna and/or a slit antenna. The structure of the slot antenna and/or the slit antenna will be described below with reference to FIGS. 12A to 12H.

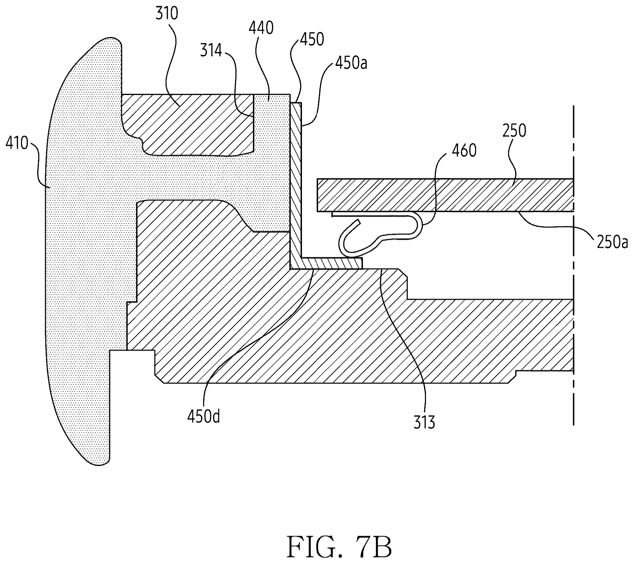

According to an embodiment, the non-conductive structure 310 may form a portion of the housing 210. For example, the non-conductive structure 310 may at least partially fill a space between the frame 218 and the support 243 in a state in which the frame 218 and the support 243 are coupled. Referring to FIG. 6, the non-conductive structure 310 may have a stepped shape. For example, the non-conductive structure 310 may include a first side 311, a second side 312, and/or a third side 313, which are stepped relative to each other. For example, the first side 311 may face a printed circuit board (PCB) 250. The second side 312 may extend in a first direction D1 toward the frame 218 from a first edge 311a of the first side 311. The third side 313 may extend in a second direction D2 toward the PCB from a second edge 311b of the first side 311. The first side 311 may be positioned between the second side 312 and the third side 313. For example, a direction in which the second side 312 faces and a direction in which the third side 313 faces may be substantially the same. For example, a direction in which the first side 311 faces may be substantially perpendicular to the direction in which the second side 312 faces. For example, the third side 313 may face a side (e.g., a side 250a of FIG. 7B) (e.g., a back side) of the PCB 250 by being disposed below the PCB 250.

According to an embodiment, at least one protruding portion 440 of the first conductive portion 410 may be partially exposed to an internal volume through an opening portion 314 of the non-conductive structure 310. For example, the opening portion 314 may be formed on the first side 311 and/or the second side 312 of the non-conductive structure 310. A side of the at least one protruding portion 440 facing the PCB 250 may be exposed to the internal volume through the opening portion 314. A conductive pattern 450 may be attached to a side of at the least one protruding portion 440 exposed through the opening portion 314 and may extend along a portion of outer sides (e.g., the first side 311, the second side 312, and/or the third side 313) of the non-conductive structure 310.

For example, the conductive pattern 450 may include a junction portion 450a, a first portion 450b, a second portion 450c, and/or a third portion 450d. The junction portion 450a may be a portion attached to a side of at the least one protruding portion 440. For example, the junction portion 450a may be attached to a side of the at least one protruding portion 440 partially exposed through the opening portion 314, through ultrasonic welding or laser bonding. For example, the first portion 450b may be a portion extending from the junction portion 450a along the first side 311 of the non-conductive structure 310. The first portion 450b may be positioned on substantially the same plane as the junction portion 450a. For example, the second portion 450c may include a portion extending from the junction portion 450a in the first direction D1. At least a portion of the second portion 450c may be positioned on the second side 312. For example, the third portion 450d may include a portion extending from the junction portion 450a in the second direction D2. At least a portion of the third portion 450d may be positioned on the third side 313.

According to an embodiment, the at least one protruding portion 440 may protrude toward the internal volume in which the PCB (e.g., the PCB 250 of FIG. 4) is positioned. The at least one protruding portion 440 may be at least partially surrounded by the non-conductive structure 310. A side of the at least one protruding portion 440 facing the PCB 250 may be exposed to the internal volume through the opening portion 314. Since the at least one protruding portion 440 protrudes into the internal volume in which the PCB 250 is positioned, an electrical connection between the PCB 250 and the first conductive portion 410 may be facilitated.

According to an embodiment, a connecting portion 460 may provide lateral contact and/or back-side contact between the first conductive portion 410 and the PCB 250 through the at least one protruding portion 440. For example, the conductive pattern 450 may be electrically connected to the PCB 250 through the connecting portion 460 contacting at least one of the junction portion 450a, the first portion 450b, the second portion 450c, and/or the third portion 450d. Since the conductive pattern 450 is in contact with at the least one protruding portion 440 of the first conductive portion 410, the PCB 250 may be electrically connected to the first conductive portion 410 through the connecting portion 460 and the conductive pattern 450. According to a position in which the connecting portion 460 contacts the conductive pattern 450, lateral contact or back-side contact may be established between the first conductive portion 410 and the PCB 250. Hereinafter, the lateral contact and the back-side contact between the first conductive portion 410 and the PCB 250 are described.

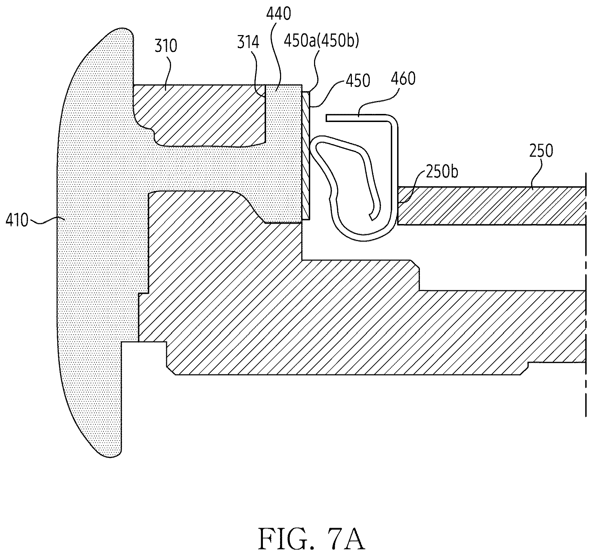

FIG. 7A illustrates an example of a lateral contact structure between a printed circuit board and a conductive portion. FIG. 7B illustrates an example of a back-side contact structure between a printed circuit board and a conductive portion.

Referring to FIG. 7A, when a connecting portion 460 is in contact with a junction portion 450a or a first portion 450b, the connecting portion 460 may provide lateral contact between a printed circuit board (PCB) 250 and a first conductive portion 410. For example, a portion of at least one protruding portion 440 of the first conductive portion 410 may be exposed through an opening portion 314 of a non-conductive structure 310. The junction portion 450a of a conductive pattern 450 may be attached to a side of the at least one protruding portion 440. The connecting portion 460 may contact a side 250b (e.g., a lateral side) of the PCB 250 facing the at least one protruding portion 440, and the junction portion 450a, respectively. The connecting portion 460 may provide lateral contact between the first conductive portion 410 and the PCB 250. For example, since the connecting portion 460 contacts the junction portion 450a of the conductive pattern 450, which is parallel to a lateral side of an electronic device 101, this may be referred to as lateral contact.

According to an embodiment, since wireless communication circuitry (e.g., the wireless communication circuitry 192 of FIG. 4) is connected to the PCB 250, the wireless communication circuitry 192 and the first conductive portion 410 may be electrically connected through the PCB 250, the connecting portion 460, and the conductive pattern 450. The wireless communication circuitry 192 may be configured to communicate with an external electronic device through the laterally contacted first conductive portion 410 and PCB 250. For example, the wireless communication circuitry 192 may be configured to feed the first conductive portion 410 and/or the conductive pattern 450 through the laterally contacted portion. However, it is not limited thereto.

Referring to FIG. 7B, when the connecting portion 460 is in contact with a third portion 450d, the connecting portion 460 may provide back-side contact between the PCB 250 and the first conductive portion 410. For example, the third portion 450d of the conductive pattern 450 may extend from the junction portion 450a onto a third side 313 of the non-conductive structure 310. The third side 313 may face a side 250a (e.g., a back side) of the PCB 250. The connecting portion 460 may contact the side 250a of the PCB 250 and the third portion 450d, respectively. The connecting portion 460 may provide back-side contact between the first conductive portion 410 and the PCB 250. For example, since the connecting portion 460 is in contact with the side 250a of the PCB 250 or with the third portion 450d of the conductive pattern 450, which is parallel to a rear side of the electronic device 101, this may be referred to as back-side contact.

According to an embodiment, since wireless communication circuitry (e.g., the wireless communication circuitry 192 of FIG. 4) is connected to the PCB 250, the wireless communication circuitry 192 and the first conductive portion 410 may be electrically connected through the PCB 250, the connecting portion 460, and the conductive pattern 450. The wireless communication circuitry 192 may be configured to communicate with an external electronic device through the back-side-contacted first conductive portion 410 and the PCB 250. For example, the wireless communication circuitry 192 may be configured to feed the first conductive portion 410 and/or the conductive pattern 450 through the back-side-contacted portion. However, it is not limited thereto.

According to an embodiment, the conductive pattern 450 extending along an outer side of the non-conductive structure 310 may provide an electrical connection between the PCB 250 connected to the wireless communication circuitry 192 and the first conductive portion 410. When the conductive pattern 450 is bonded to a side of the at least one protruding portion 440 and does not extend along the outer side of the non-conductive structure 310, a protruding portion for back-side contact between the first conductive portion 410 and the PCB 250 may be formed. For example, the protruding portion may be formed to be long for back-side contact with the PCB 250. For example, the elongated protruding portion may extend from the at least one protruding portion 440 to below the side 250a (e.g., the back side) of the PCB 250, and the connecting portion 460 may contact the side 250a and the elongated protruding portion, respectively. According to an embodiment, as the conductive pattern 450 extends along the outer side (e.g., the third side 313) of the non-conductive structure 310, the connecting portion 460 may electrically connect the first conductive portion 410 and the PCB 250, even without being directly connected to the first conductive portion 410. For example, for back-side contact between the first conductive portion 410 and the PCB 250, back-side contact may be achieved using the conductive pattern 450 even when the first conductive portion 410 does not include the elongated protruding portion that extends to overlap with the PCB 250. In a case of the elongated protruding portion structure for back-side contact, design of the elongated protruding portion structure may be difficult as a physical structure of a frame 218 and the non-conductive structure 310 should be changed. According to an embodiment, since a length of the conductive pattern 450 may be easily adjusted, the elongated protruding portion may be replaced simply by extending the conductive pattern 450 onto the third side 313 of the non-conductive structure 310. According to an embodiment, a structure for back-side contact between the first conductive portion 410 and the PCB 250 may be easily designed using the conductive pattern 450.

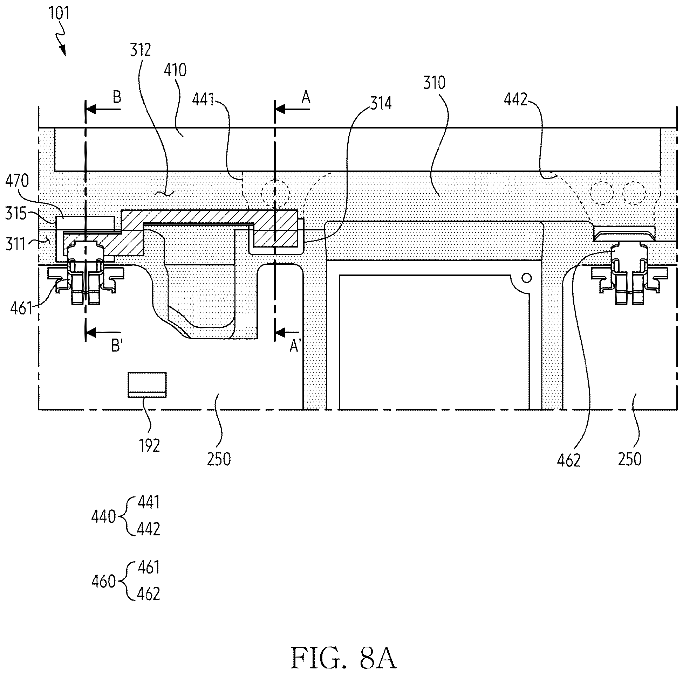

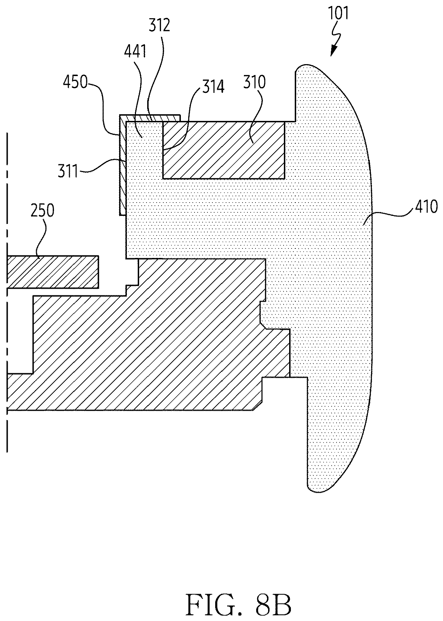

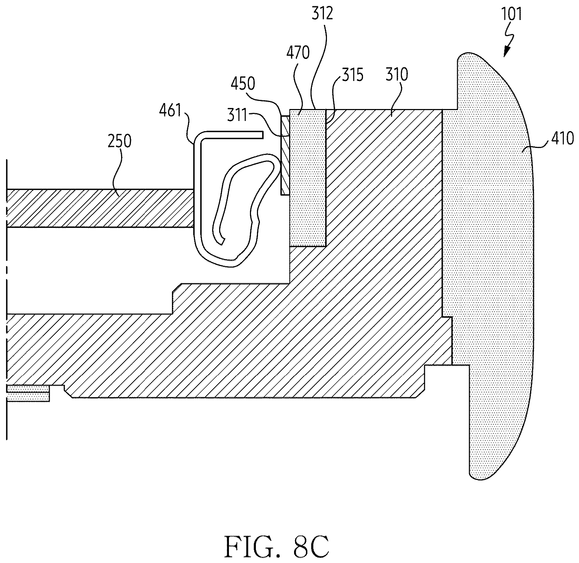

FIG. 8A illustrates a connection state of a connecting portion and a conductive pattern according to an embodiment. FIG. 8B is a cross-sectional view of an electronic device according to an embodiment, cut along line A-A' of FIG. 8A. FIG. 8C is a cross-sectional view of an electronic device according to an embodiment, cut along line B-B' of FIG. 8A.

Referring to FIG. 8A, at least one protruding portion 440 may include a first protruding portion 441 and a second protruding portion 442. For example, the second protruding portion 442 may be spaced apart from the first protruding portion 441. For example, the first protruding portion 441 may include a feed point of a first conductive portion 410. The second protruding portion 442 may include a ground point of the first conductive portion 410.

According to an embodiment, lateral contact and/or back-side contact between the first conductive portion 410 and a printed circuit board (PCB) 250 may be difficult according to a structure of a housing (e.g., the housing 210 of FIG. 4) and/or a structure of the PCB 250. For example, referring to FIGS. 8A and 8B, when an area of the PCB 250 adjacent to the first protruding portion 441 is narrow, or when a space between the PCB 250 and the first protruding portion 441 is limited, there may be insufficient space to dispose a connecting portion 460 that contacts the PCB 250 and a conductive pattern 450 attached to the first protruding portion 441, respectively.

According to an embodiment, when the first protruding portion 441 includes the feed point of the first conductive portion 410, the conductive pattern 450 may be used to provide an electrical path for feeding the first conductive portion 410. According to an embodiment, the conductive pattern 450 may provide an electrical connection between the PCB 250 and the first conductive portion 410 by extending from a conductive member 470 to the at least one protruding portion 440.

Referring to FIGS. 8A and 8C, an electronic device 101 according to an embodiment may further include the conductive member 470 distinct from the at least one protruding portion 440. For example, the at least one protruding portion 440 may be a portion of the first conductive portion 410, protruding from the first conductive portion 410 toward the PCB 250. For example, the conductive member 470 may be spaced apart from the first conductive portion 410 and may be disposed in a non-conductive structure 310. For example, a portion of the conductive member 470 may be positioned in the non-conductive structure 310. The conductive member 470 may be exposed to an internal volume through a recess 315 of the non-conductive structure 310.

According to an embodiment, the conductive member 470 may secure a portion of the conductive pattern 450. For example, the conductive pattern 450 may be difficult to attach to a non-conductive material (e.g., polybutylene terephthalate (PBT) resin) included in the non-conductive structure 310. When the conductive pattern 450 is disposed on the non-conductive structure 310, an electrical connection between the connecting portion 460 and the conductive pattern 450 may be unstable due to the unsecured conductive pattern 450. For example, the conductive pattern 450 may be attached to the conductive member 470 including a conductive material (e.g., metal) through ultrasonic welding or laser bonding. At least a portion of the conductive member 470 may be exposed through the recess 315, and the conductive pattern 450 may be secured by being attached to the exposed conductive member 470.

Referring to FIG. 8A, the connecting portion 460 may include a first connecting portion 461 and a second connecting portion 462. For example, the first connecting portion 461 may be in contact with the conductive pattern 450 that contacts the conductive member 470 disposed in the non-conductive structure 310. The second connecting portion 462 may be in contact with the second protruding portion 442 through an opening portion 314 of the non-conductive structure 310.

For example, the first connecting portion 461 may contact the PCB 250 and the conductive pattern 450 that contacts the conductive member 470, respectively. The conductive pattern 450 may provide an electrical connection between the PCB 250 and the first conductive portion 410 by extending from the conductive member 470 to the first protruding portion 441. For example, the conductive pattern 450 may extend from the conductive member 470 along a first side 311 and a second side 312 to the first protruding portion 441 exposed through the opening portion 314. For example, the first protruding portion 441 may include the feed point of the first conductive portion 410, and the second protruding portion 442 may include the ground point of the first conductive portion 410. For example, the second connecting portion 462, which is electrically connected to the second protruding portion 442, may be electrically connected to a ground layer of the PCB 250. When wireless communication circuitry 192 transmits a signal to an external electronic device, the transmission signal provided from the wireless communication circuitry 192 may be provided to the conductive pattern 450 through the PCB 250 and the first connecting portion 461. As the transmission signal is transmitted along the conductive pattern 450 to the first protruding portion 441, the first conductive portion 410 may be fed.

According to an embodiment, the conductive pattern 450 may provide an electrical connection between the first conductive portion 410 and the wireless communication circuitry 192. When it is difficult for the connecting portion 460 to contact the first protruding portion 441, the conductive pattern 450 with a thin thickness may be disposed to contact the conductive member 470 and the first protruding portion 441, respectively. The first conductive portion 410 may operate as an antenna radiator by being electrically connected to the wireless communication circuitry 192 through the conductive pattern 450. For example, when the first protruding portion 441 includes the feed point of the first conductive portion 410, the conductive pattern 450 may operate as a bridge for transmitting the feed signal. According to an embodiment, when it is difficult to dispose the connecting portion 460 to be connected to the first protruding portion 441, the PCB 250 and the first conductive portion 410 may be electrically connected through the conductive pattern 450.

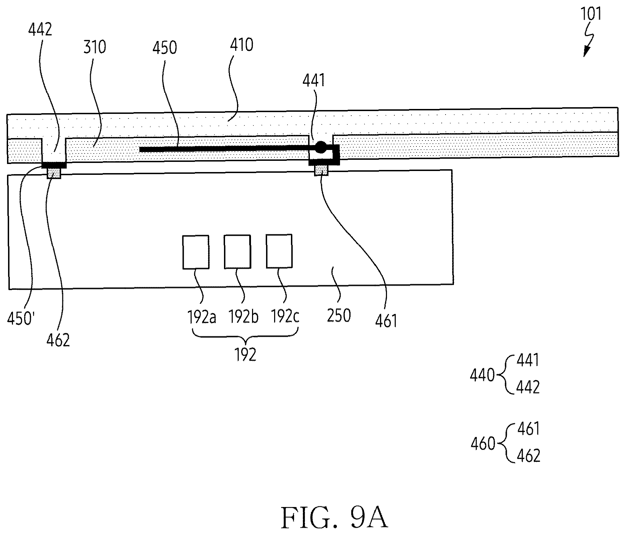

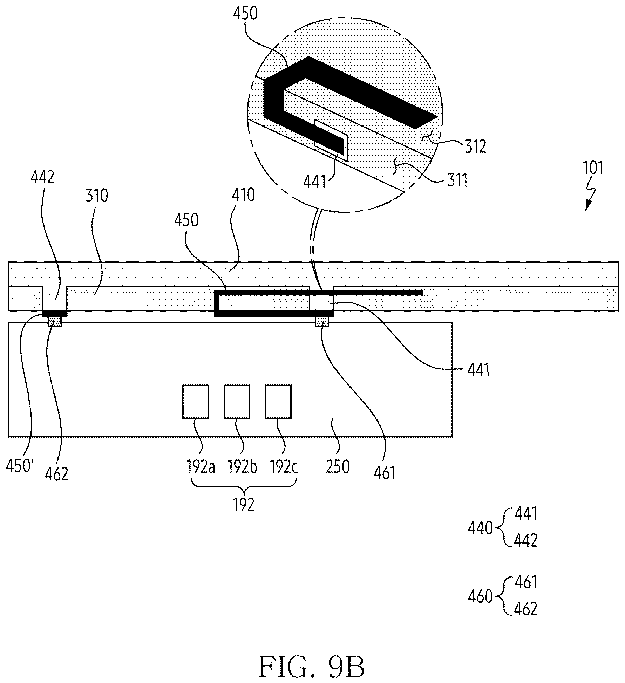

FIGS. 9A and 9B schematically illustrate examples of an electronic device.

Referring to FIGS. 9A and 9B, a first conductive portion 410 may include a first protruding portion 441 and a second protruding portion 442 spaced apart from each other. For example, the first protruding portion 441 and the second protruding portion 442 may protrude toward a printed circuit board (PCB) 250 to facilitate an electrical connection between the first conductive portion 410 and the PCB 250. For example, the first protruding portion 441 may include a feed point of the first conductive portion 410, and the second protruding portion 442 may include a ground point of the first conductive portion 410. A signal provided from wireless communication circuitry 192 may be provided to the first conductive portion 410 through the feed point of the first protruding portion 441. The second protruding portion 442 may be electrically connected to a ground layer of the PCB 250.

According to an embodiment, the wireless communication circuitry 192 may be electrically connected to the PCB 250. For example, a connecting portion 460 may include a first connecting portion 461 and a second connecting portion 462. The first connecting portion 461 may contact a conductive pattern 450 and the PCB 250, respectively. The second connecting portion 462 may contact another conductive pattern 450' coupled to the second protruding portion 442, and the PCB 250, respectively. The first protruding portion 441 may be electrically connected to the PCB 250 through the conductive pattern 450 and the first connecting portion 461. The second protruding portion 442 may be electrically connected to the PCB 250 through the second connecting portion 462 and the other conductive pattern 450'. The conductive pattern 450 contacting the first connecting portion 461 and the other conductive pattern 450' contacting the second connecting portion 462 may be spaced apart from each other. For example, the conductive pattern 450 may extend along an outer side of a non-conductive structure 310 so as not to contact the other conductive pattern 450'.

According to an embodiment, a portion of the conductive pattern 450 may extend from the first protruding portion 441 along the outer side of the non-conductive structure 310. For example, as illustrated in FIG. 9A, the conductive pattern 450 may be attached to the first protruding portion 441 and may extend from the portion attached to the first protruding portion 441 toward the second protruding portion 442 along the outer side of the non-conductive structure 310. However, it is not limited thereto. For example, as illustrated in FIG. 9B, a portion of the conductive pattern 450 may extend from the portion attached to the first protruding portion 441 toward the second protruding portion 442, and the remaining portion of the conductive pattern 450 may extend in a direction away from the second protruding portion 442 along the outer side of the non-conductive structure 310. For example, the conductive pattern 450 may extend from the portion attached to the first protruding portion 441 along a first side 311, bend between the first protruding portion 441 and the second protruding portion 442 toward a second side 312, and extend on the second side 312 in a direction away from the second protruding portion 442. Through the structure, a length of the conductive pattern 450 may be ensured. A structure of the conductive pattern 450 is not limited to the illustrated example, and the conductive pattern 450 may vary by extending along the outer side of the non-conductive structure 310.

According to an embodiment, the conductive pattern 450 may provide an electrical connection between the first protruding portion 441 and the first connecting portion 461. The conductive pattern 450 may provide stability of an electrical connection between the first conductive portion 410 and the PCB 250 by reducing galvanic corrosion caused by the first conductive portion 410 and the connecting portion 460.

According to an embodiment, a length of the first conductive portion 410 and the length of the conductive pattern 450 may be different. For example, when the first conductive portion 410 operates as an antenna radiator, a radiation current formed along the first conductive portion 410 may be formed from the first protruding portion 441 including the feed point to the second protruding portion 442 including the ground point. When the conductive pattern 450 operates as an antenna radiator, a radiation current formed along the conductive pattern 450 may be formed along the conductive pattern 450. Since the radiation current formed along the first conductive portion 410 and the radiation current formed along the conductive pattern 450 are different, an antenna including at least a portion of the first conductive portion 410 and an antenna including at least a portion of the conductive pattern 450 may be configured to transmit and/or receive signals in different frequency bands.

For example, the first conductive portion 410 may operate as an antenna radiator capable of transmitting and/or receiving a first signal on a first frequency band. For example, first wireless communication circuitry 192a may be configured to communicate with an external electronic device by feeding the first signal to the first conductive portion 410 through the conductive pattern 450. For example, the first signal provided from the first wireless communication circuitry 192a to the first conductive portion 410 may be provided to the first conductive portion 410 through the PCB 250, the first connecting portion 461, and the conductive pattern 450. As the first wireless communication circuitry 192a feeds the first conductive portion 410 through the first protruding portion 441, a radiation current may be formed from the first protruding portion 441 to the second protruding portion 442. At least a portion of the first conductive portion 410 may operate as an antenna radiator for transmitting and/or receiving the first signal.

According to an embodiment, the conductive pattern 450 may operate as an antenna radiator capable of transmitting and/or receiving a second signal on a second frequency band. For example, second wireless communication circuitry 192b may be configured to communicate with an external electronic device by feeding the second signal to the conductive pattern 450. For example, the second signal provided from the second wireless communication circuitry 192b to the conductive pattern 450 may be provided to the conductive pattern 450 through the PCB 250 and the first connecting portion 461. As the second wireless communication circuitry 192b feeds the conductive pattern 450, a radiation current may be formed along the conductive pattern 450. The conductive pattern 450 may operate as an antenna radiator for transmitting and/or receiving the second signal.

According to an embodiment, the first conductive portion 410 and the conductive pattern 450, which are electrically connected to each other, may operate as an antenna radiator capable of transmitting and/or receiving a third signal on a third frequency band. For example, third wireless communication circuitry 192c may be configured to communicate with an external electronic device by feeding the third signal to an antenna radiator that includes at least a portion of the first conductive portion 410 and at least a portion of the conductive pattern 450, which are electrically connected to each other. For example, the third signal provided from the third wireless communication circuitry 192c to the antenna may be provided to the antenna through the PCB 250 and the first connecting portion 461. As the third wireless communication circuitry 192c feeds the antenna, a radiation current may be formed along at least a portion of the first conductive portion 410 and at least a portion of the conductive pattern 450. For example, a resonant frequency of the third signal may be formed based on a length of at least a portion of the first conductive portion 410 and at least a portion of the conductive pattern 450 along which the radiation current is formed. At least a portion of the first conductive portion 410 and at least a portion of the conductive pattern 450 may operate as an antenna radiator for transmitting and/or receiving the third signal.

The electronic device 101 according to an embodiment may communicate with an external electronic device using the conductive pattern 450. Since the first conductive portion 410, formed as a portion of the frame 218, is difficult to change a physical structure, it may be difficult to adjust radiation characteristics of an antenna including at least a portion of the first conductive portion 410. According to an embodiment, the conductive pattern 450 may provide an electrical connection between the connecting portion 460 and at least one protruding portion 440, and may be used to adjust the radiation characteristics of the antenna including at least a portion of the first conductive portion 410 by substantially extending the length of the first conductive portion 410. According to an embodiment, the conductive pattern 450 may operate as an independent antenna radiator. As the conductive pattern 450 operates as an antenna radiator, the conductive pattern 450 may replace another antenna structure (e.g., an LDS antenna) for wireless communication of the electronic device 101.

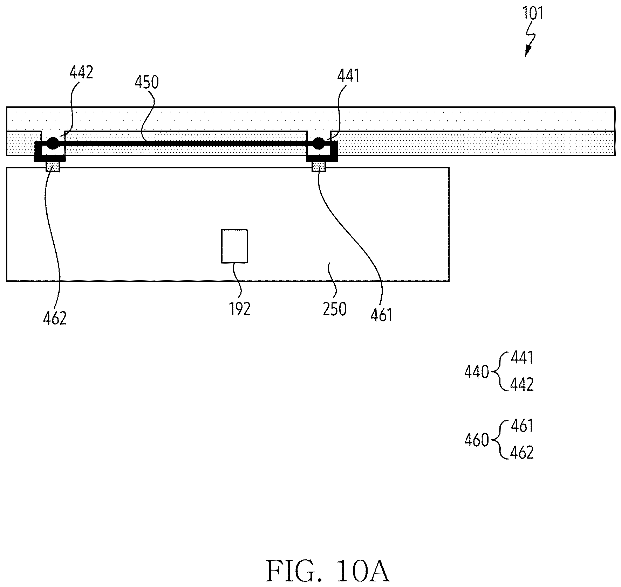

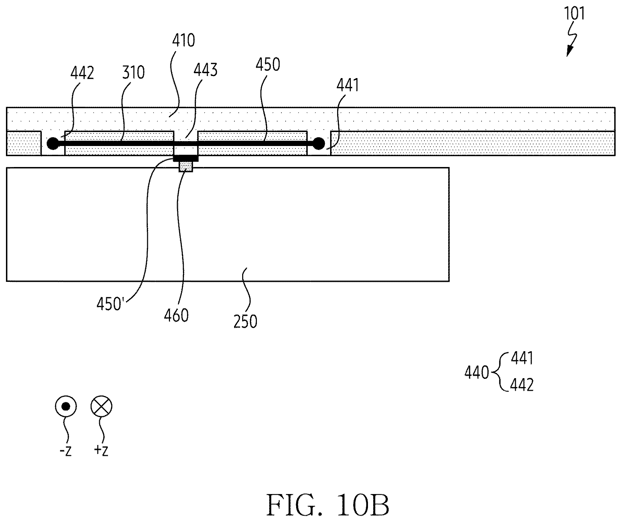

FIGS. 10A and 10B schematically illustrate an example of an electronic device.

Referring to FIG. 10A, a conductive pattern 450 may extend from a first protruding portion 441 to a second protruding portion 442. For example, one end of the conductive pattern 450 may be attached to the first protruding portion 441, and the other end of the conductive pattern 450 may be attached to the second protruding portion 442. For example, a connecting portion 460 may include a first connecting portion 461 and a second connecting portion 462. The first connecting portion 461 may contact a portion of the conductive pattern 450 attached to the first protruding portion 441 and a printed circuit board (PCB) 250, respectively. The second connecting portion 462 may contact another portion of the conductive pattern 450 attached to the second protruding portion 442 and the PCB 250, respectively.

According to an embodiment, a first conductive portion 410 may operate as an antenna radiator. For example, the first protruding portion 441 may include a feed point of the first conductive portion 410, and the second protruding portion 442 may include a ground point of the first conductive portion 410. For example, an antenna including the first protruding portion 441, the second protruding portion 442, and the first conductive portion 410 may operate as an inverted F antenna (IFA).

According to an embodiment, the conductive pattern 450 extending from the first protruding portion 441 to the second protruding portion 442 may form a loop antenna together with at least a portion of the first conductive portion 410. For example, a loop may be formed through at least a portion of the first conductive portion 410, the first protruding portion 441, the second protruding portion 442, and the conductive pattern 450. For example, wireless communication circuitry 192 may feed the loop antenna through a portion of the conductive pattern 450 attached to the first protruding portion 441. The first conductive portion 410 may form a portion of the loop antenna by the conductive pattern 450. An electronic device 101 according to an embodiment may implement a loop antenna through the conductive pattern 450 without changing a structure of a housing 210.

Referring to FIG. 10B, the loop antenna formed by the first conductive portion 410 and the conductive pattern 450 may be fed through another portion of the first conductive portion 410 that is not in contact with the conductive pattern 450. For example, the first conductive portion 410 may further include a third protruding portion 443 positioned between the first protruding portion 441 and the second protruding portion 442. A portion of the third protruding portion 443 positioned in a non-conductive structure 310 may be exposed to an internal volume. The conductive pattern 450 may extend along an outer side of the non-conductive structure 310 from the first protruding portion 441 to the second protruding portion 442. The third protruding portion 443 positioned in the non-conductive structure 310 and the conductive pattern 450 may partially overlap. For example, at least a portion of the third protruding portion 443 may be positioned in a +z direction or a -z direction with respect to the conductive pattern 450. The conductive pattern 450 may pass through the +z direction or the -z direction of the third protruding portion 443 along the outer side of the non-conductive structure 310.

According to an embodiment, the connecting portion 460 may contact another conductive pattern 450' coupled to the third protruding portion 443 and the PCB 250, respectively. For example, the third protruding portion 443 may be electrically connected to the PCB 250 through the conductive pattern 450' and the connecting portion 460. The conductive pattern 450 may be spaced apart from the other conductive pattern 450' coupled to the third protruding portion 443. For example, the conductive pattern 450 may be spaced apart from the other conductive pattern 450' by extending along the outer side of the non-conductive structure 310 surrounding the third protruding portion 443. The wireless communication circuitry 192 connected to the PCB 250 may feed the loop antenna through the third protruding portion 443. For example, a signal provided from the wireless communication circuitry 192 may be provided to the first conductive portion 410 through the connecting portion 460 in contact with the PCB 250 and the third protruding portion 443.

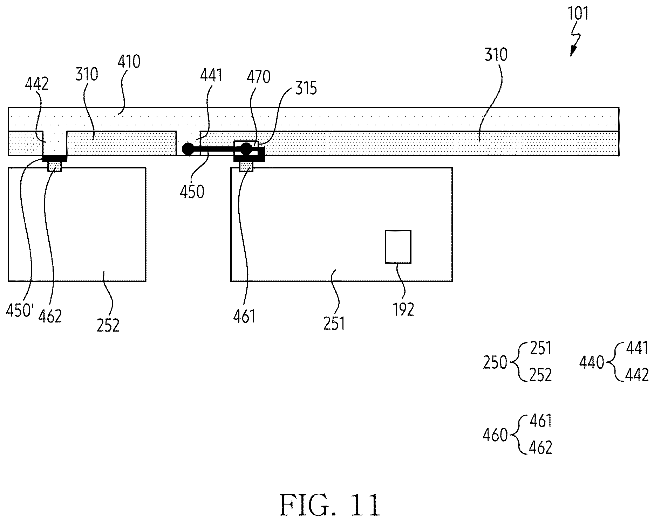

FIG. 11 schematically illustrates an example of an electronic device.

Referring to FIG. 11, an electronic device 101 may include a conductive member 470 positioned in a non-conductive structure 310. The conductive member 470 may be spaced apart from a first conductive portion 410 and may be exposed to an internal volume. For example, the non-conductive structure 310 may include a recess 315 for the conductive member 470.

According to an embodiment, the electronic device 101 may include printed circuit boards (PCBs) 251 and 252 spaced apart from each other. For example, the electronic device 101 may include a first PCB 251 and a second PCB 252 spaced apart from the first PCB 251. For example, each of the first PCB 251 and the second PCB 252 may be configured to provide an electrical connection between different electronic components. Although not illustrated, the electronic device 101 may include a connecting member (e.g., a flexible printed circuit board) that connects the first PCB 251 and the second PCB 252.

According to an embodiment, the first conductive portion 410 may include a first protruding portion 441 and a second protruding portion 442 spaced apart from each other. For example, the first protruding portion 441 may include a feed point of the first conductive portion 410, and the second protruding portion 442 may include a ground point of the first conductive portion 410. According to positions of the first protruding portion 441 and the second protruding portion 442, an electrical connection between the first conductive portion 410 and a printed circuit board (PCB) 250 may be difficult. For example, as illustrated in FIG. 11, the first protruding portion 441 may be difficult to connect to the first PCB 251 and the second PCB 252. For example, the first protruding portion 441 may face a spaced region between the first PCB 251 and the second PCB 252. When the first protruding portion 441 includes the feed point of the first conductive portion 410 and wireless communication circuitry 192 is connected to the first PCB 251, a connecting member extending from the first protruding portion 441 to the first PCB 251 may be required to feed the first conductive portion 410. Since the first protruding portion 441 and the first PCB 251 do not face each other, a connecting member having a length greater than or equal to a distance between the first protruding portion 441 and the first PCB 251 may be required. In a limited internal volume, disposition of the connecting member of the structure may be difficult.

According to an embodiment, the electronic device 101 may include the conductive member 470 facing the PCB 250. For example, the conductive member 470 may be disposed in the non-conductive structure 310 and may be exposed to the internal volume. The conductive member 470 may face the first PCB 251.

According to an embodiment, a conductive pattern 450 may extend from the conductive member 470 to the first protruding portion 441. For example, a portion of the conductive pattern 450 may be attached to the conductive member 470, and another portion of the conductive pattern 450 may be attached to the first protruding portion 441. According to an embodiment, a connecting portion 460 may include a first connecting portion 461 and a second connecting portion 462. For example, the first connecting portion 461 may contact the first PCB 251 and a portion of the conductive pattern 450 attached to the conductive member 470, respectively. For example, the second connecting portion 462 may contact another conductive pattern 450' coupled to the second protruding portion 442 and the second PCB 252, respectively.

According to an embodiment, the first conductive portion 410 may be electrically connected to the first PCB 251 through the conductive pattern 450 and the first connecting portion 461. For example, since the conductive member 470 faces the first PCB 251, one end of the conductive pattern 450 attached to the conductive member 470 and the first PCB 251 may be electrically connected through the first connecting portion 461 having a simple structure. Since the conductive pattern 450 contacts the conductive member 470 and the first protruding portion 441, respectively, the first conductive portion 410 may be electrically connected to the first PCB 251 through the conductive pattern 450. A signal provided from the wireless communication circuitry 192 may be provided to the first conductive portion 410 through the first PCB 251, the first connecting portion 461, and the conductive pattern 450. The conductive pattern 450 may operate as a bridge for transmitting a feed signal. When an electrical connection between the PCB 250 and the first conductive portion 410 is difficult, the electrical connection may be facilitated through the conductive pattern 450.

According to an embodiment, the first conductive portion 410 and the conductive pattern 450, which are electrically connected, may operate as an antenna radiator. When the conductive pattern 450 is not included, the first conductive portion 410 may operate as an antenna radiator based on a length from the first protruding portion 441, which includes the feed point, to the second protruding portion 442, which includes the ground point. For example, the first conductive portion 410 may operate as an antenna radiator for transmitting and/or receiving a first signal by being fed from the wireless communication circuitry 192.

According to an embodiment, when the first conductive portion 410 and the conductive pattern 450 are electrically connected and operate as an antenna radiator, an electrical length of an antenna including the first conductive portion 410 may be substantially extended. The electrically connected first conductive portion 410 and conductive pattern 450 may operate as an antenna radiator by being fed from the wireless communication circuitry 192. Frequency characteristics (e.g., a resonant frequency) of a signal transmitted and/or received through the antenna radiator including the first conductive portion 410 and the conductive pattern 450 may vary according to a length of the conductive pattern 450.

For example, when the conductive pattern 450 does not have a length capable of adjusting the frequency characteristics and operates as the bridge for transmitting the feed signal, the electrical length of the antenna including the first conductive portion 410 may be substantially maintained. In the case described above, the frequency characteristics of the signal may not change. The first conductive portion 410 and the conductive pattern 450 may operate as an antenna radiator for transmitting and/or receiving the first signal.

For example, when the conductive pattern 450 has a length capable of adjusting the frequency characteristics and operates as the bridge for transmitting the feed signal, the electrical length of the antenna including the first conductive portion 410 may be substantially extended. In the case described above, the frequency characteristics of the signal may change. The first conductive portion 410 and the conductive pattern 450 may operate as an antenna radiator for transmitting and/or receiving a third signal different from the first signal.

FIGS. 12A to 12H schematically illustrate examples of an electronic device.

Referring to FIG. 12A, a conductive pattern 450 may form a slot antenna and/or a slit antenna. For example, a first conductive portion 410 may include a first protruding portion 441, a second protruding portion 442, and connecting parts 491 and 492 positioned in a non-conductive structure 310. The first protruding portion 441 and the second protruding portion 442 may be spaced apart from each other. The connecting parts 491 and 492 may connect a support 243 and a frame 218. For example, the connecting parts 491 and 492 may include a first connecting part 491 and/or a second connecting part 492. For example, the first connecting part 491 may be positioned between the first protruding portion 441 and the second protruding portion 442. For example, the second protruding portion 442 may be positioned between the first connecting part 491 and the second connecting part 492. The first protruding portion 441 and the second protruding portion 442 may be exposed to an internal volume.

According to an embodiment, the conductive pattern 450 may include a first conductive pattern 451 and a second conductive pattern 452. For example, the first conductive pattern 451 may extend from the second protruding portion 442 to the first connecting part 491. A portion of the first conductive pattern 451 may be attached to the second protruding portion 442, and another portion of the first conductive pattern 451 may be in contact with the first connecting part 491. For example, the second conductive pattern 452 may extend in a direction away from the first connecting part 491 from the first protruding portion 441.

According to an embodiment, the first conductive portion 410, the second protruding portion 442, the connecting parts 491 and 492, and the first conductive pattern 451 may form a slot, and as a signal fed to the first conductive portion 410 and the first conductive pattern 451 is radiated from the slot, at least a portion of a slot antenna may be formed. The second protruding portion 442 may be electrically connected to a printed circuit board (PCB) 250 through the first conductive pattern 451 and a second connecting portion 462. The second protruding portion 442 may include a feed point of the slot antenna. The first connecting part 491 connected to the support 243 may include a ground point of the slot antenna. According to an embodiment, even without forming a separate slot by processing the frame 218, a slot antenna may be formed using the conductive pattern 450. For example, when a portion of the first conductive pattern 451 forming the slot antenna is positioned along a second side (e.g., the second side 312 of FIG. 6), the slot antenna may be spaced apart from a display (e.g., the display 201 of FIG. 2). As the slot antenna is spaced apart from the display 201, interference between the display 201 and the slot antenna may be reduced.

According to an embodiment, the non-conductive structure 310 may extend along the first conductive portion 410 and a second conductive portion 420. For example, the non-conductive structure 310 may include a first non-conductive portion 316 between the first conductive portion 410 and the second conductive portion 420. An end portion of the first conductive portion 410 may be in contact with the first non-conductive portion 316. The first conductive portion 410 may be spaced apart from the second conductive portion 420 by the first non-conductive portion 316. For example, the first non-conductive portion 316 may be integrally formed with the non-conductive structure 310.

According to an embodiment, the second conductive pattern 452 may be attached to the first protruding portion 441 and may extend in parallel with a portion of the first conductive portion 410. For example, the first protruding portion 441, a portion of the first conductive portion 410, and the second conductive pattern 452 may form a portion of a slit antenna. The second conductive pattern 452 may be used to adjust radiation characteristics of the slit antenna. For example, a length of the second conductive pattern 452 attached to the first protruding portion 441 may change the radiation characteristics of the slit antenna by adjusting a length of a slit formed by the first conductive portion 410, the first protruding portion 441, and the second conductive pattern 452. For example, the slit antenna may be fed through the first protruding portion 441.

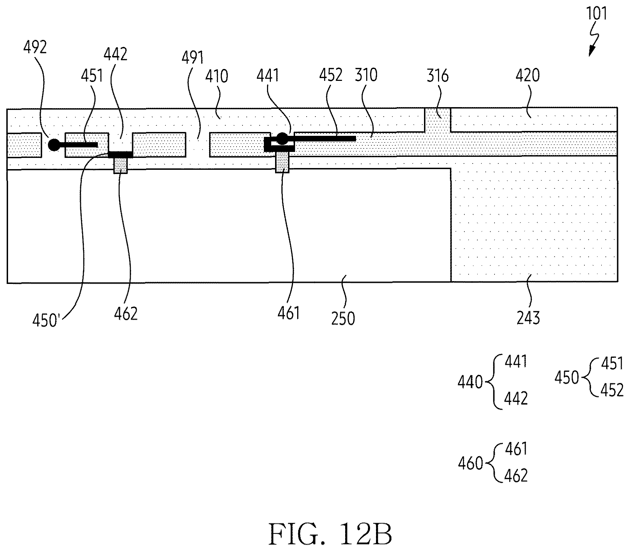

According to various embodiments, a slot antenna and/or a slit antenna included in an electronic device 101 are not limited to the structure illustrated in FIG. 12A and may be implemented in various structures. Hereinafter, a structure of a slot antenna and/or a slit antenna is described with reference to FIGS. 12B to 12H. Descriptions overlapping with those provided in reference to FIG. 12A may be omitted.

Referring to FIG. 12B, the first conductive pattern 451 may extend from the second connecting part 492 toward the second protruding portion 442. For example, a portion of the first conductive pattern 451 may be attached to the second connecting part 492, and another portion of the first conductive pattern 451 may be positioned on the non-conductive structure 310 between the second connecting part 492 and the second protruding portion 442. The second connecting portion 462 may contact another conductive pattern 450' coupled to the second protruding portion 442 and the PCB 250, respectively.

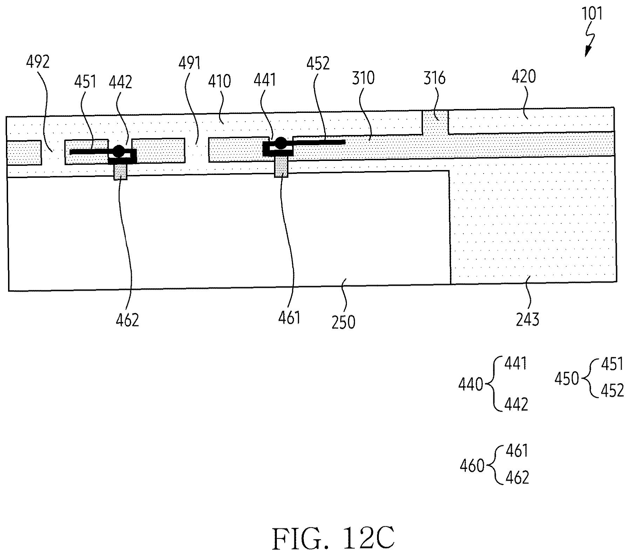

Referring to FIG. 12C, the first conductive pattern 451 may extend from the second protruding portion 442 toward the connecting part 492. For example, a portion of the first conductive pattern 451 may be attached to the second protruding portion 442, and another portion of the first conductive pattern 451 may be positioned on the non-conductive structure 310 between the second connecting part 492 and the second protruding portion 442.

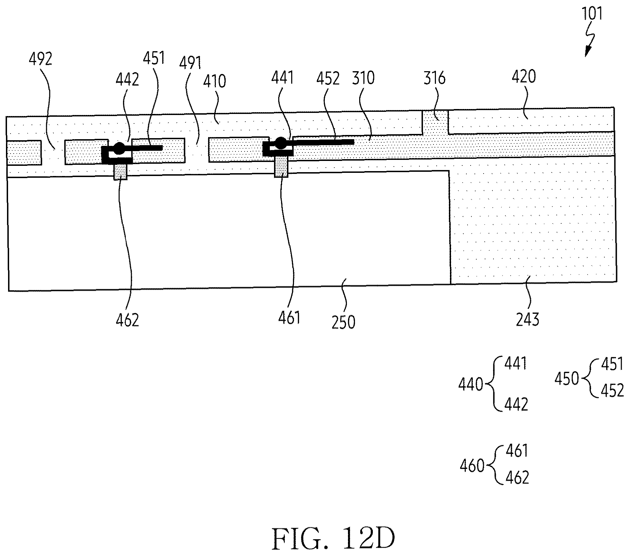

Referring to FIG. 12D, the first conductive pattern 451 may extend from the second protruding portion 442 toward the first connecting part 491. For example, a portion of the first conductive pattern 451 may be attached to the second protruding portion 442, and another portion of the first conductive pattern 451 may be positioned on the non-conductive structure 310 between the second protruding portion 442 and the first connecting part 491.

In the case of the exemplary structure illustrated in FIG. 12A, the first conductive pattern 451 may extend from the second protruding portion 442 to the first connecting part 491, and in the case of the exemplary structures illustrated in FIGS. 12B, 12C, and 12D, the first conductive pattern 451 may extend to a point on the non-conductive structure 310 between the first connecting part 491 and the second connecting part 492. Since the first conductive pattern 451 may extend in various patterns along an outer side of the non-conductive structure 310, a length of the first conductive pattern 451 may be variably adjusted.

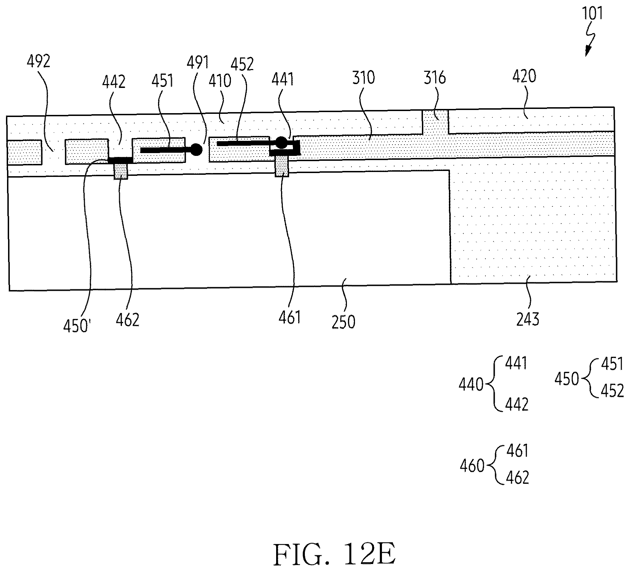

Referring to FIG. 12E, the first conductive pattern 451 may extend from the first connecting part 491 toward the second protruding portion 442. For example, a portion of the first conductive pattern 451 may be attached to the first connecting part 491, and another portion of the first conductive pattern 451 may be positioned on the non-conductive structure 310 between the first connecting part 491 and the second protruding portion 442. For example, the second conductive pattern 452 may extend in a direction approaching the first connecting part 491 from the first protruding portion 441. For example, a portion of the second conductive pattern 452 may be attached to the first protruding portion 441, and another portion of the second conductive pattern 452 may be positioned on the non-conductive structure 310 between the first protruding portion 441 and the first connecting part 491. In the case described above, the first protruding portion 441 and a portion of the first conductive portion 410 may form a portion of a slit antenna.

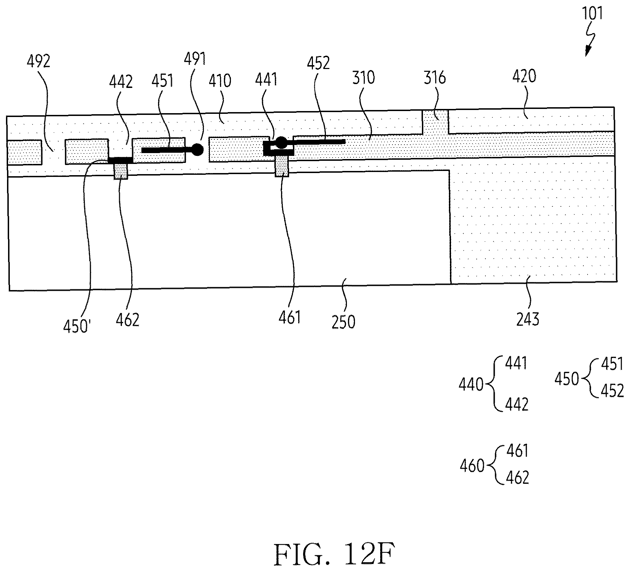

Referring to FIG. 12F, unlike the exemplary structure illustrated in FIG. 12E, the second conductive pattern 452 may extend in a direction away from the first connecting part 491, from the first protruding portion 441. A portion of the second conductive pattern 452 may be attached to the first protruding portion 441, and another portion of the second conductive pattern 452 may be positioned on a point of the non-conductive structure 310 positioned in the direction away from the first connecting part 491, from the first protruding portion 441.

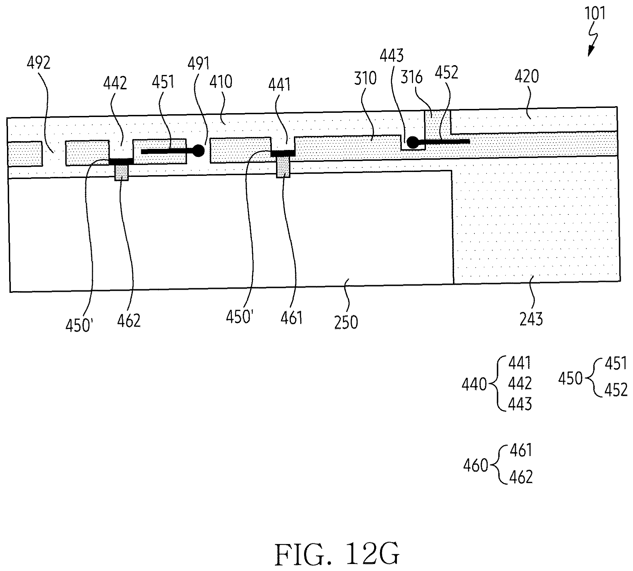

Referring to FIG. 12G, the first conductive portion 410 may further include a third protruding portion 443. For example, the first protruding portion 441 may be positioned between the second protruding portion 442 and the third protruding portion 443. For example, the third protruding portion 443 may protrude into an internal volume from a portion of the first conductive portion 410 in contact with the first non-conductive portion 316. According to an embodiment, the second conductive pattern 452 may extend in a direction away from the first protruding portion 441, from the third protruding portion 443. For example, a portion of the second conductive pattern 452 may be attached to the third protruding portion 443 and may extend in parallel with a portion of the second conductive portion 420. For example, the second conductive pattern 452 forming a portion of a slit antenna may at least partially overlap the second conductive portion 420.

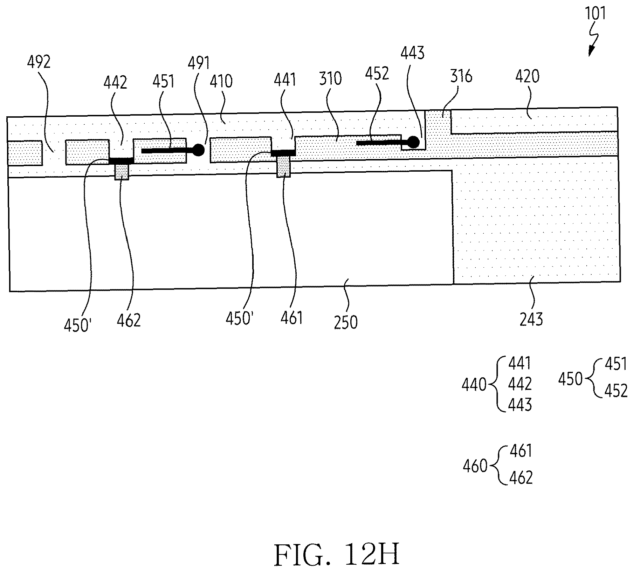

Referring to FIG. 12H, unlike the exemplary structure illustrated in FIG. 12G, the second conductive pattern 452 may extend in a direction approaching the first connecting part 491 from the third protruding portion 443. A portion of the second conductive pattern 452 may be attached to the third protruding portion 443, and another portion of the second conductive pattern 452 may be positioned on the non-conductive structure 310 between the first protruding portion 441 and the third protruding portion 443. For example, the second conductive pattern 452 forming a portion of a slit antenna may overlap the first conductive portion 410.

The electronic device 101 may include various structures for implementing a slit antenna and/or a slot antenna and is not limited to the illustrated embodiment. For example, the electronic device 101 may include a slit antenna and a slot antenna positioned at different locations. For example, although a portion of a slot antenna and/or a portion of a slit antenna is illustrated as being formed through the first conductive portion 410 and/or the second conductive portion 420 in FIGS. 12A to 12G, it is not limited thereto. For example, a portion of the slot antenna may be formed through the first conductive portion 410 and/or a second conductive portion 420, and a portion of a slit antenna may be formed through a third conductive portion (e.g., the third conductive portion 430 of FIG. 4). In addition to these embodiments, various other embodiments may be possible.

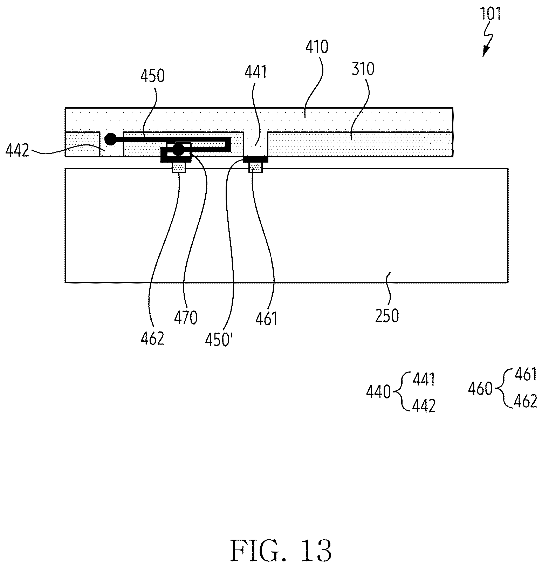

FIG. 13 schematically illustrates an example of an electronic device.

Referring to FIG. 13, a conductive pattern 450 may substantially extend a length of a first conductive portion 410. For example, the first conductive portion 410 may include a first protruding portion 441 and a second protruding portion 442. A conductive member 470 may be positioned between the first protruding portion 441 and the second protruding portion 442.

According to an embodiment, the conductive pattern 450 may extend from the second protruding portion 442 to the conductive member 470. A portion of the conductive pattern 450 may be attached to the second protruding portion 442, and another portion of the conductive pattern 450 may be attached to the conductive member 470.

According to an embodiment, a connecting portion 460 may include a first connecting portion 461 and a second connecting portion 462. The first connecting portion 461 may contact another conductive pattern 450' coupled to the first protruding portion 441 and a printed circuit board (PCB) 250, respectively. The second connecting portion 462 may contact another portion of the conductive pattern 450 attached to the conductive member 470 and the PCB 250, respectively.

According to an embodiment, the length of the first conductive portion 410 may be substantially extended by the conductive pattern 450. The first conductive portion 410 and the conductive pattern 450, which are electrically connected to each other, may operate as an antenna radiator for transmitting and/or receiving a first signal. For example, when the conductive pattern 450 is not included, an antenna including at least a portion of the first conductive portion 410 may be formed based on a length from the first protruding portion 441 to the second protruding portion 442, as wireless communication circuitry 192 feeds the first conductive portion 410. Since the length of the first conductive portion 410 is limited, a band of the antenna including at least a portion of the first conductive portion 410 may be limited. Since the length of the first conductive portion 410 is substantially extended by a length of the conductive pattern 450, frequency characteristics (e.g., resonant frequency) of a signal transmitted through the antenna radiator including the first conductive portion 410 and the conductive pattern 450 may differ from frequency characteristics of a signal transmitted and/or received through an antenna radiator including at least a portion of the first conductive portion 410 without the conductive pattern 450. Since the conductive pattern 450 extends along an outer side (e.g., the first side 311, the second side 312, and the third side 313 of FIG. 6) of a non-conductive structure 310, the length may be easily adjusted in a relatively narrow space. For example, the length of the conductive pattern 450 extending along the outer side of the non-conductive structure 310 may be adjusted according to a band to be covered.

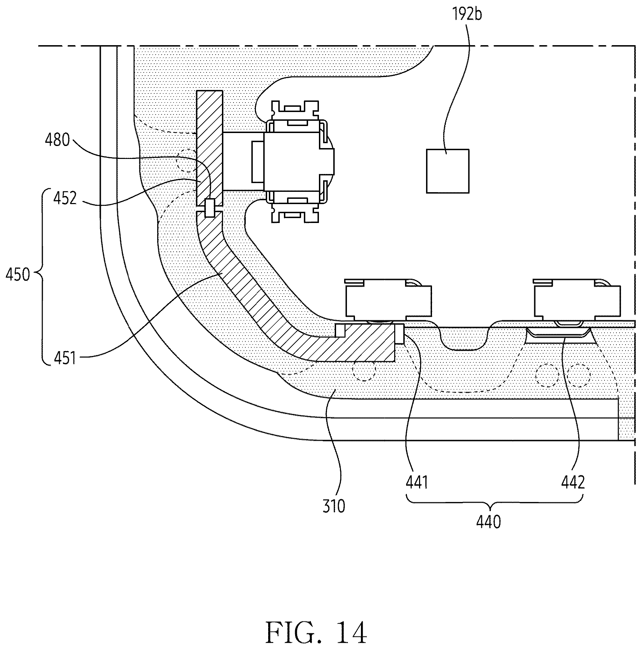

FIG. 14 illustrates a portion of an electronic device according to an embodiment.

Referring to FIG. 14, a conductive pattern 450 according to an embodiment may include a first conductive pattern 451 and a second conductive pattern 452. For example, the first conductive pattern 451 may extend from at least one protruding portion 440 of a first conductive portion 410. For example, the first conductive pattern 451 may be attached to a first protruding portion 441 and may extend along an outer side of a non-conductive structure 310. For example, the second conductive pattern 452 may be spaced apart from the first conductive pattern 451 and may extend along the outer side of the non-conductive structure 310. For example, the first conductive pattern 451 and the second conductive pattern 452 may be attached to the outer side of the non-conductive structure 310 through an adhesive layer.

An antenna including the conductive pattern 450 may have radiation characteristics according to a length of the conductive pattern 450. For example, as second wireless communication circuitry 192b feeds the conductive pattern 450, a radiation current may be formed along the conductive pattern 450. A resonant frequency for the antenna including the conductive pattern 450 may be formed based on the length of the conductive pattern 450 in which the radiation current is formed. When the length of the conductive pattern 450 is changed, the radiation characteristics of the antenna may change.

According to an embodiment, an electronic device 101 may include connection circuitry 480 to adjust the radiation characteristics of the antenna including the conductive pattern 450. For example, the connection circuitry 480 may be connected to the first conductive pattern 451 and the second conductive pattern 452, respectively. The first conductive pattern 451 and the second conductive pattern 452 may be electrically connected by the connection circuitry 480. For example, the connection circuitry 480 may include a capacitor and/or an inductor, but is not limited thereto.

According to an embodiment, the connection circuitry 480 may determine frequency characteristics (e.g., resonant frequency) of the antenna including the conductive pattern 450. For example, the connection circuitry 480 may have a designated parameter value (e.g., capacitance or inductance) to allow only a signal in a designated frequency band to pass. For example, the first conductive pattern 451 and the second conductive pattern 452 may operate as an antenna radiator for transmitting and/or receiving a signal capable of passing through the connection circuitry 480. For example, for a signal capable of passing through the connection circuitry 480, an antenna having radiation characteristics based on the connection circuitry 480, a length of the first conductive pattern 451, and an electrical length of the second conductive pattern 452 may be formed. For example, for a signal not capable of passing through the connection circuitry 480, only the first conductive pattern 451 may operate as an antenna radiator. For a signal not capable of passing through the connection circuitry 480, an antenna having radiation characteristics based on the length of the first conductive pattern 451 may be formed. According to an embodiment, the connection circuitry 480 may be used to determine the frequency characteristics of the antenna including the conductive pattern 450.

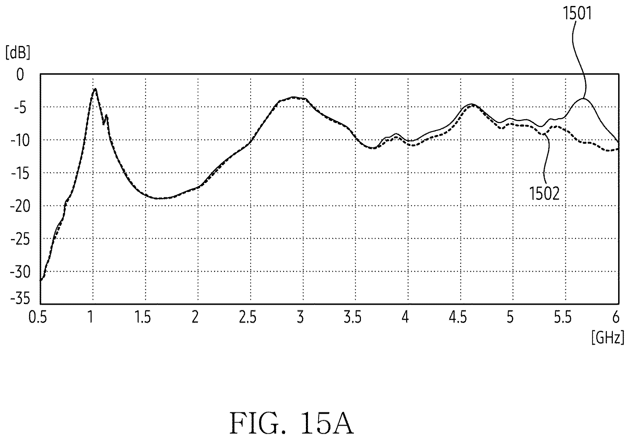

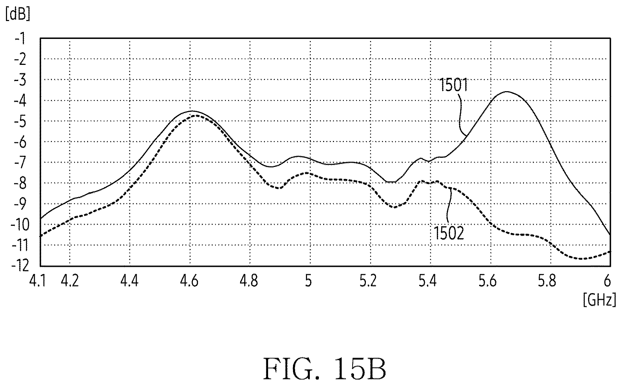

FIG. 15A is a graph indicating radiation characteristics of an electronic device including a conductive pattern according to an embodiment. FIG. 15B illustrates a portion of the graph of FIG. 15A. An x-axis of the graph is frequency (unit: giga hertz (GHz)), and a y-axis of the graph is antenna efficiency (unit: decibel (dB)).

Referring to FIG. 15A and FIG. 15B, a first graph 1501 indicates radiation characteristics of an electronic device (e.g., the electronic device 101 of FIG. 4) according to an embodiment. In the electronic device 101 according to an embodiment, a conductive pattern (e.g., the conductive pattern 450 of FIG. 4) may be configured to operate as an antenna radiator.

A second graph 1502 indicates radiation characteristics of an electronic device according to a comparative example that does not include the conductive pattern 450. In the electronic device according to the comparative example, the conductive pattern 450 only provides an electrical connection to reduce galvanic corrosion between a connecting portion (e.g., the connecting portion 460 of FIG. 4) and a conductive portion (e.g., the first conductive portion 410 of FIG. 4), and does not operate as an antenna radiator.

Referring to FIG. 15A, on a frequency band from approximately 0.5 GHz to approximately 4 GHz, radiation efficiency of the electronic device 101 according to an embodiment and the electronic device according to the comparative example may be similar. Referring to FIG. 15B, on a frequency band of approximately 4 GHz or more, the first graph 1501 may have a higher gain than the second graph 1502. For example, on the N79 band (e.g., 4.4 GHz to 5.0 GHz) defined by 3GPP, the first graph 1501 may have a gain approximately 1 dB higher than that of the second graph 1502. For example, on a 5 GHz WiFi band, the first graph 1501 may have a gain approximately 7 dB higher than that of the second graph 1502. The electronic device 101 according to an embodiment may have high radiation efficiency on a band of approximately 4 GHz or more by using the conductive pattern 450.

An electronic device (e.g., the electronic device 101 of FIG. 4) according to an embodiment may comprise a housing (e.g., the housing 210 of FIG. 4), a printed circuit board (PCB) (e.g., the printed circuit board 250 of FIG. 4), a conductive portion (e.g., the first conductive portion 410 of FIG. 4), a conductive pattern (e.g., the conductive pattern 450 of FIG. 4), a connecting portion (e.g., the connecting portion 460 of FIG. 4), and wireless communication circuitry (e.g., the wireless communication circuitry 192 of FIG. 4). The housing may include a frame (e.g., the frame 218 of FIG. 4), a support (e.g., the support 243 of FIG. 4), and a non-conductive structure (e.g., the non-conductive structure 310 of FIG. 4). The frame may at least partially surround an internal volume of the electronic device. The support may extend from the frame to the internal volume. The non-conductive structure may be in contact with the frame and the support. The PCB may be positioned on the support. The conductive portion may be formed along a portion of the frame. The conductive portion may include at least one protruding portion (e.g., the at least one protruding portion 440 of FIG. 4). The at least one protruding portion may protrude toward an interior of the housing. The conductive pattern may be in contact with the at least one protruding portion. The conductive pattern may extend along an outer side of the non-conductive structure. The connecting portion may electrically connect the PCB and the conductive pattern by contacting the PCB and the conductive pattern in contact with the at least one protruding portion, respectively. The wireless communication circuitry may be connected to the PCB. The wireless communication circuitry may be configured to wirelessly communicate with an external electronic device through at least a portion of the conductive pattern. According to an embodiment of the present disclosure, the conductive pattern may provide an electrical connection between the connecting portion and the conductive portion, thereby reducing galvanic corrosion and stably maintaining the electrical connection. The conductive pattern may operate as a portion of an antenna radiator together with the conductive portion, or may operate as an antenna radiator independently of the conductive portion. By using the conductive pattern, a length of the conductive portion may be substantially extended, enabling a variety of signals to be transmitted and/or received through an antenna including the conductive pattern. Since a length of the conductive pattern may be easily adjusted, a frequency characteristic of an antenna including at least a portion of the conductive pattern may be easily adjusted. Since a separate antenna (e.g., an LDS antenna) may be omitted by using the conductive pattern as an antenna radiator, design of the electronic device may be facilitated.

According to an embodiment, the wireless communication circuitry may include first wireless communication circuitry (e.g., the first wireless communication circuitry 192a of FIG. 5), and second wireless communication circuitry (e.g., the second wireless communication circuitry 192b of FIG. 5). The first wireless communication circuitry may be configured to transmit or receive a first signal on a first frequency band through the conductive portion. The second wireless communication circuitry may be configured to transmit or receive a second signal on a second frequency band through the conductive pattern. The conductive pattern may be configured to provide an electrical connection between the PCB and the conductive portion. According to an embodiment of the present disclosure, the electronic device may include a plurality of antennas for signals on various frequency bands. For example, the conductive portion may operate as an antenna radiator for transmitting and/or receiving the first signal. The conductive pattern may operate as an antenna radiator for transmitting and/or receiving the second signal different from the first signal. The electronic device may transmit and/or receive a signal that is difficult to transmit and/or receive through an antenna including at least a portion of the conductive portion, through the conductive pattern.

According to an embodiment, the first wireless communication circuitry may be configured to feed the conductive portion through the conductive pattern in contact with the conductive portion. According to an embodiment of the present disclosure, the conductive pattern may be in contact with the at least one protruding portion including a feed point of the conductive portion. The first wireless communication circuitry may provide a signal to the feed point through the conductive pattern.

According to an embodiment, the first wireless communication circuitry may be electrically connected to the conductive portion through the PCB, the connecting portion, and the conductive pattern. The second wireless communication circuitry may be electrically connected to the conductive pattern through the PCB and the connecting portion. According to an embodiment of the present disclosure, the conductive pattern may form a transmission line for a signal provided to the conductive portion. The conductive pattern may be positioned between the connecting portion and the conductive portion. For example, if the at least one protruding portion partially exposed to the internal volume directly contacts the connecting portion, galvanic corrosion may be caused between dissimilar metals. The conductive pattern attached to the conductive portion may provide stable contact by reducing galvanic corrosion.

According to an embodiment, the non-conductive structure may include a first side (e.g., the first side 311 of FIG. 6), a second side (e.g., the second side 312 of FIG. 6), and a third side (e.g., the third side 313 of FIG. 6). The first side may be spaced apart from the conductive portion. The first side may face the PCB. The second side may be bent, from an edge (e.g., the first edge 311a of FIG. 6) of the first side, in a first direction toward the frame. The third side may be bent, from another edge (e.g., the second edge 311b of FIG. 6) of the first side, in a second direction opposite to the first direction. The conductive pattern may extend along at least a portion of the first, second, or third sides. According to an embodiment of the present disclosure, the conductive pattern may extend along the outer side of the non-conductive structure. The length of the conductive pattern positioned on the first side, the second side, and/or the third side may be easily adjusted. For example, the second side may be opposite to a display. Since the conductive pattern positioned on the second side is spaced apart from a display (e.g., the display 201 of FIG. 3), interference between the conductive pattern and the display may be reduced. The conductive pattern positioned on the third side may provide back-side contact by contacting a back side (e.g., the side 250a of FIG. 7B) of the PCB.

According to an embodiment, the at least one protruding portion may be in contact with the conductive pattern by being exposed through an opening portion (e.g., the opening portion 314 of FIG. 6) formed on the first side of the non-conductive structure. According to an embodiment of the present disclosure, the at least one protruding portion may be positioned in the non-conductive structure. The at least one protruding portion exposed through the opening portion may be in contact with the conductive pattern. The conductive pattern may be electrically connected to the PCB through the connecting portion, thereby establishing an electrical connection between the wireless communication circuitry and the conductive portion.

According to an embodiment, the third side may face a side (e.g., a back side) of the PCB. A portion of the conductive pattern may be positioned on the second side. The connecting portion may be in contact with the side of the PCB and the portion of the conductive pattern positioned on the second side, respectively. According to an embodiment of the present disclosure, the conductive pattern may be electrically connected to a lateral side and/or a back side of the PCB. In a housing structure requiring back-side contact, the back side of the PCB facing the second side and the conductive pattern may be electrically connected.

According to an embodiment, the wireless communication circuitry may include third wireless communication circuitry (e.g., the third wireless communication circuitry 192c of FIG. 5). The third wireless communication circuitry may be configured to transmit or receive a third signal on a third frequency band through the conductive portion and the conductive pattern electrically connected to each other.

According to an embodiment, the third wireless communication circuitry may be configured to transmit or receive the third signal on the third frequency band based on a length of the conductive portion and the conductive pattern electrically connected to each other. According to an embodiment of the present disclosure, the conductive pattern may operate as an independent antenna radiator. For example, as the third wireless communication circuitry feeds the third signal to the conductive pattern, an antenna including the conductive pattern may be formed.

According to an embodiment, the at least one protruding portion may include a first protruding portion (e.g., the first protruding portion 441 of FIG. 10A) and a second protruding portion (e.g., the second protruding portion 442 of FIG. 10A). The second protruding portion may be spaced apart from the first protruding portion. The conductive pattern may extend from the first protruding portion to the second protruding portion. A portion of the non-conductive structure may be surrounded by the conductive portion and the conductive pattern. According to an embodiment of the present disclosure, the conductive pattern may form a loop antenna and/or a slot antenna. According to an embodiment, a loop antenna and/or a slot antenna may be easily implemented using the conductive pattern without changing the physical structure.

According to an embodiment, the electronic device may further comprise a conductive member (e.g., the conductive member 470 of FIG. 11). The conductive member may be electrically connected to the PCB through the conductive pattern. The conductive member may be spaced apart from the conductive portion. The conductive member may at least partially overlap the non-conductive structure. The conductive pattern may extend from the conductive member to the at least one protruding portion. According to an embodiment of the present disclosure, the conductive member may support a portion of the conductive pattern. The conductive pattern may be difficult to fix to the non-conductive structure that includes a non-conductive material. The conductive pattern may be fixed through the conductive member positioned in the non-conductive structure. The length of the conductive portion may be substantially extended by the conductive pattern extending from the conductive member to the at least one protruding portion. As the length of the conductive portion is substantially extended, a frequency characteristic of an antenna including at least a portion of the conductive portion may be adjusted.

According to an embodiment, the PCB may include a first PCB (e.g., the first PCB 251 of FIG. 11) and a second PCB (e.g., the second PCB 252 of FIG. 11). The second PCB may be spaced apart from the first PCB. The conductive member may face the first PCB. The at least one protruding portion may face a spaced region between the first PCB and the second PCB. According to an embodiment of the present disclosure, when it is difficult to connect the conductive portion and the PCB, the conductive pattern may function as a bridge for an electrical connection between the PCB and the conductive portion. For example, when the at least one protruding portion is disposed far from the PCB, a size of the connecting portion may be increased for an electrical connection between the PCB and the at least one protruding portion. A connecting portion having a large size may be difficult to be disposed in a limited internal volume of the housing. According to an embodiment, the conductive pattern may electrically connect the PCB and the conductive portion by contacting the at least one protruding portion and the conductive member, respectively.

The electronic device according to an embodiment may further comprise another conductive portion (e.g., the second conductive portion 420 of FIG. 12A). The other conductive portion may be spaced apart from the conductive portion. The other conductive portion may be positioned along another portion of the frame. The non-conductive structure may extend to a region between the conductive portion and the other conductive portion. According to an embodiment of the present disclosure, the non-conductive structure may form a segmented structure of the frame. For example, the non-conductive structure may electrically separate the conductive portions by extending between them.

According to an embodiment, the at least one protruding portion may include a first protruding portion (e.g., the first protruding portion 441 of FIG. 12A) and a second protruding portion (e.g., the second protruding portion 442 of FIG. 12A). The second protruding portion may be spaced apart from the first protruding portion. The conductive portion may include a connecting part (e.g., the first connecting part 491 of FIG. 12A). The connecting part may be connected to the support. The connecting part may be disposed between the first protruding portion and the second protruding portion. The conductive pattern may include a first conductive pattern (e.g., the first conductive pattern 451 of FIG. 12A) and a second conductive pattern (e.g., the second conductive pattern 452 of FIG. 12A). The first conductive pattern may extend from the second protruding portion to the connecting part. The second conductive pattern may extend from the first protruding portion toward the second conductive portion. According to an embodiment of the present disclosure, the conductive pattern may form a slot antenna and/or a slit antenna. According to an embodiment, to implement a slot antenna and/or a slit antenna, a slot antenna and/or a slit antenna may be formed using the conductive pattern without changing the physical structure.

According to an embodiment, the conductive pattern may include a first conductive pattern and a second conductive pattern spaced apart from each other. The electronic device may further comprise connection circuitry (e.g., the connection circuitry 480 of FIG. 14). The connection circuitry may be configured to electrically connect the first conductive pattern and the second conductive pattern. According to an embodiment of the present disclosure, the connection circuitry may adjust the length of the conductive pattern. For example, when the first conductive pattern and the second conductive pattern are electrically connected through the connection circuitry, an antenna including the conductive pattern may have a frequency characteristic based on a length of the first conductive pattern and a length of the second conductive pattern. For example, the connection circuitry may include a capacitor and an inductor.

An electronic device (e.g., the electronic device 101 of FIG. 4) according to an embodiment may comprise a housing (e.g., the housing 210 of FIG. 4), a non-conductive structure (e.g., the non-conductive structure 310 of FIG. 4), a conductive portion (e.g., the first conductive portion 410 of FIG. 4), a conductive pattern (e.g., the conductive pattern 450 of FIG. 4), first wireless communication circuitry (e.g., the first wireless communication circuitry 192a of FIG. 5), and second wireless communication circuitry (e.g., the second wireless communication circuitry 192b of FIG. 5). The housing may include a frame (e.g., the frame 218 of FIG. 4) and a support (e.g., the support 243 of FIG. 4). The support may be positioned in an internal volume surrounded by the frame. The non-conductive structure may be positioned between the frame and the support. The conductive portion may be positioned along a portion of the frame. The conductive pattern may be in contact with the conductive portion. The conductive pattern may be positioned on the non-conductive structure. The first wireless communication circuitry may be connected to the printed circuit board (PCB). The first wireless communication circuitry may be configured to transmit or receive a first signal on a first frequency band through the conductive pattern. The second wireless communication circuitry may be connected to the PCB. The second wireless communication circuitry may be configured to transmit or receive a second signal on a second frequency band through the conductive portion. The conductive pattern may provide an electrical connection between the PCB and the conductive portion.

According to an embodiment, the non-conductive structure may include a first side (e.g., the first side 311 of FIG. 6), a second side (e.g., the second side 312 of FIG. 6), and a third side (e.g., the third side 313 of FIG. 6). The first side may be spaced apart from the conductive portion. The first side may face the PCB. The second side may be bent, from an edge (e.g., the first edge 311a of FIG. 6) of the first side, in a first direction toward the frame. The third side may be bent, from another edge (e.g., the second edge 311b of FIG. 6) of the first side, in a second direction opposite to the first direction. The conductive pattern may extend along at least a portion of the first, second, and third sides.

According to an embodiment, the wireless communication circuitry may include third wireless communication circuitry (e.g., the third wireless communication circuitry 192c of FIG. 5). The third wireless communication circuitry may be configured to transmit or receive a third signal on a third frequency band through the conductive portion and the conductive pattern electrically connected to each other.

According to an embodiment, the third wireless communication circuitry may be configured to transmit or receive the third signal on the third frequency band based on a length of the conductive portion and the conductive pattern electrically connected to each other.

According to an embodiment, the conductive pattern may include a first conductive pattern and a second conductive pattern spaced apart from each other. The electronic device may further comprise connection circuitry (e.g., the connection circuitry 480 of FIG. 14). The connection circuitry may be configured to electrically connect the first conductive pattern and the second conductive pattern.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a housing including:
a frame at least partially surrounding an internal volume of the electronic device,
a support disposed in the internal volume, and
a non-conductive structure in contact with the frame and the support;
a printed circuit board (PCB) disposed on the support;
a conductive portion, forming a portion of the frame, including at least one protruding portion protruding toward the internal volume;
a conductive pattern, in contact with the at least one protruding portion, extending along an outer side of the non-conductive structure;
a connecting portion electrically connecting the PCB and the conductive pattern by contacting the PCB and the conductive pattern, respectively; and
wireless communication circuitry, electrically connected to the PCB, configured to communicate with an external electronic device through at least a portion of the conducive pattern.

2. The electronic device of claim 1,
wherein the wireless communication circuitry includes:
first wireless communication circuitry configured to transmit or receive a first signal on a first frequency band through the conducive portion, and
second wireless communication circuitry configured to transmit or receive a second signal on a second frequency band through the conducive portion, and
wherein the conductive pattern is configured to provide an electrical connection between the PCB and the conducive portion.

3. The electronic device of claim 2,
wherein the first wireless communication circuitry is configured to feed the conductive portion through the conductive pattern in contact with the conductive portion.

4. The electronic device of claim 2,
wherein the first wireless communication circuitry is electrically connected to the conductive portion through the PCB, the connecting portion, and the conductive pattern, and
wherein the second wireless communication circuitry is electrically connected to the conductive pattern through the PCB and the connecting portion.

5. The electronic device of any one of claims 1 to 4,
wherein the non-conductive structure includes:
a first side, spaced apart from the conductive portion, facing the PCB,
a second side that is bent, from an edge of the first side, in a first direction toward the frame, and
a third side that is bent, from another edge of the first side, in a second direction opposite to the first direction, and
wherein the conductive pattern extends along at least a portion of the first, second, or third sides.

6. The electronic device of claim 5,
wherein the at least one protruding portion is in contact with the conductive pattern, by being exposed through an opening portion formed on the first side of the non-conductive structure.

7. The electronic device of claim 5 or 6,
wherein the third side faces a side of the PCB,
wherein a portion of the conductive pattern is positioned on the second side, and
wherein the connecting portion is in contact with the side of the PCB and the portion of the conductive pattern positioned on the second side, respectively.

8. The electronic device of any one of claims 1 to 7,
wherein the wireless communication circuitry includes third wireless communication circuitry configured to transmit or receive a third signal on a third frequency band through the conductive portion and the conductive pattern electrically connected to each other.

9. The electronic device of claim 8,
wherein the third wireless communication circuitry is configured to transmit or receive the third signal on the third frequency band based on a length of the conductive portion and the conductive pattern electrically connected to each other.

10. The electronic device of any one of claims 1 to 9,
wherein the at least one protruding portion includes:
a first protruding portion, and
a second protruding portion spaced apart from the first protruding portion,
wherein the conductive pattern extends from the first protruding portion to the second protruding portion, and
wherein a portion of the non-conductive structure is surrounded by the conducive portion and the conductive pattern.

11. The electronic device of any one of claims 1 to 10, further comprising a conductive member, electrically connected to the PCB through the conductive pattern, spaced apart from the conductive portion, and at least partially overlapping the non-conductive structure,
wherein the conductive pattern extends from the conductive member to the at least one protruding portion.

12. The electronic device of any one of claims 1 to 11,
wherein the PCB includes a first PCB and a second PCB spaced apart from the first PCB, and
wherein the at least one protruding portion faces a spaced region between the first PCB and the second PCB.

13. The electronic device of any one of claims 1 to 12, further comprising a second conductive portion, spaced apart from the conductive portion, positioned along another portion of the frame,
wherein the non-conductive structure extends to a region between the conductive portion and the second conductive portion.

14. The electronic device of claim 13,
wherein the at least one protruding portion includes:
a first protruding portion, and
a second protruding portion spaced apart from the first protruding portion,
wherein the conductive portion includes a connecting part, connected to the support, disposed between the first protruding portion and the second protruding portion, and
wherein the conductive pattern includes:
a first conductive pattern extending from the second protruding portion to the connecting part, and
a second conductive pattern extending from the first protruding portion toward the second conductive portion.

15. The electronic device of any one of claims 1 to 14,
wherein the conductive pattern includes a first conductive pattern and a second conductive pattern spaced apart from each other, and
wherein the electronic device further comprises connection circuitry configured to electrically connect to the first conductive pattern and the second conductive pattern.
